# EUROPEAN PATENT APPLICATION

(11) **EP 2 641 647 A1**
(43) Date of publication of application: **25.09.2013**
(21) Application number: 11841351.7
(22) Date of filing: 11.11.2011
(51) Int. Cl.: B01D 53/22

(54) **MEMBRANE GAS SEPARATION PLANT AND METHOD FOR OPERATING SAME**

(30) Priority: 18.11.2010 RU 2010146786; 18.11.2010 RU 2010146784; 28.01.2011 RU 2011103091; 28.01.2011 RU 2011103090; 28.04.2011 RU 2011116895; 28.04.2011 RU 2011116894; 17.05.2011 RU 2011119725; 06.07.2011 RU 2011127529; 06.07.2011 RU 2011127531
(71) Applicant: Closed Joint-Stock Company "Grasys", Moscow 115280 (RU)
(72) Inventor: GULYANSKY, Mikhail Alexandrovich, Moscow 117587 (RU); DOKUCHAEV, Nicolay Leonidovich, Balashikha Moskovskaya obl. 143900 (RU); KOTENKO, Alexander Alexandrovich, Moscow 117246 (RU); KRASHENINNIKOV, Eugeny Gennadievich, Khimki Moskovskaya obl. 141700 (RU); POTEKHIN, Sergey Vladimirovich, Khimki Moskovskaya obl. 141411 (RU); CHELYAK, Mikhail Mikhailovich, Moscow 121096 (RU); TEREKHOVA, Marina Kadyrovna, Moscow 109369 (RU)
(74) Representative: Staudt, Hans-Peter
(86) International application number: PCT/RU2011/000888
(87) International publication number: WO 2012/067545

(57) **Abstract**

The proposed method of the plant operation for treatment of High Pressure Mixed Gas (HPMG) from high permeable components (HPC), containing membrane gas-separation units (MGSUs) with high pressure volume (HPV), low pressure volume (LPV) and selectively permeable membrane (SPM), installed between cavities, where LPV of at least one of MGSM is continuously purged with treated gas mixture (semi-product or product), herewith pressure drop between the mentioned cavities of the MGSU and also consumption of the treated gas mixture directed to purging are sustained at a level so that contents of each of HPVs in product does not exceed the desirable contents. The proposed method allows to simultaneously treat feedstock (HPMG) from one or several HPCs (including helium, hydrogen sulphide, merkaptans, carbon dioxide, water and/or heavy hydrocarbons), increase treatment efficiency (i.e. ratio between total area of SPM in the plant, its capacity and specific energy consumption of the gas-separation process), and provides for possibility of usage (reprocessing or treatment) of feedstock with higher contents of HPCs.

## Description

### RELATED TECHNICAL FIELD

The innovations group refers to the field of gas mixtures separation by selectively permeable membranes (SPM) and can be applied in gas, oil, chemical and other industrial fields.

### TECHNICAL LEVEL

Majority of tasks on treatment of hydrocarbon gas mixtures require simultaneous feedstock treatment as the HPMG (HP gas mixture) simultaneously from several components, herewith the treatment process as a rule has to be carried out without significant pressure loss of the HPMG and with minimum feedstock losses (i.e. with maximum product yield as feedstock treated to set parameters).

For example, natural gas supplied to the main pipelines must correspond with the industrial standards related to this technical field on the limit contents of several components namely, the content of hydrogen sulphide, merkaptans,CO2, water vapours and condensing hydrocarbons. For the moderate climate the limiting mass concentration of hydrogen sulphide in gas mixture per OST 51.40-93 must be no more than 7 mg/m³, merkaptans must be no more than 16 mg/m³, molar part of CO2 must be no more than 2.5% mole, hydrocarbon dew point - no higher than minus 2°C, water dew point - no higher than minus 10°C. The requirements to the limiting contents of water vapours and condensing hydrocarbons are more stringent for regions with cold climate with the same requirements to hydrogen sulphide, merkaptans and CO2: hydrocarbon dew point must be no higher than minus 5.0 °C in summer and minus 10.0 °C in winter, for water dew point must be minus 14 °C in summer and minus 20.0 °C in winter.

Besides high yield of the finished product the gas separation processes must provide as low energy consumption as possible for yield of the product unit (specific energy consumption). Thus it is necessary to minimize the energy consumption at the compressors' drive (active equipment), heat-exchange (heating and cooling), and also increase the productivity of the passive equipment, first of all the square area unit of a selectively permeable membrane (SPM).

There're SPMs with gas separation bed made of silica organic materials with high ratio of water vapours diffusion rate to methane diffusion rate and low ratio of butane, hydrogen sulphide, merkaptans, helium rate to methane diffusion rate. These membranes are efficient only for drying of hydrocarbon mixtures.

Composite membranes to be used for simultaneous treatment of the feedstock (HPMG) from water vapours, acid gases and heavy hydrocarbons have selective beds made of block copolymers, consisting of elastic and rigid blocks, for example, membranes made of copolymers of polyoxyethylene with polyamide PEG (PEBAX®), polyester and polymide (Polyactive®) etc. With the certain ratios of elastic and rigid membrane block the above mentioned polymers have high selectivity values with preservation of high enough specific permeability. For example, membranes with the selectivity values α (H₂O)/(CH₄) ≥ 280, α (He)/(CH₄) ≥ 150, α (MS)/(CH₄) ≥ 65 (where MS - merkaptans sum), α (H₂S)/(CH₄)≥40, α (C_{g}H₁₄)/(CH₄) ≥25 possess specific permeability of methane at temperature 25.0°C-P/1(CH₄) ≥ 30 1/m ²h atm. Herewith the selectivity values of this membrane on all components are higher than the corresponding values of selectivity of the best silica organic membranes. For example, membrane selectivity values (specific permeability ratio) made of polydimethyle siloxane (Lestosil), compose α (H₂O)/(CH₄) ≤25, α (He)/(CH4) ≤ 2, α (H₂S)/(CH₄) ≥ 8.

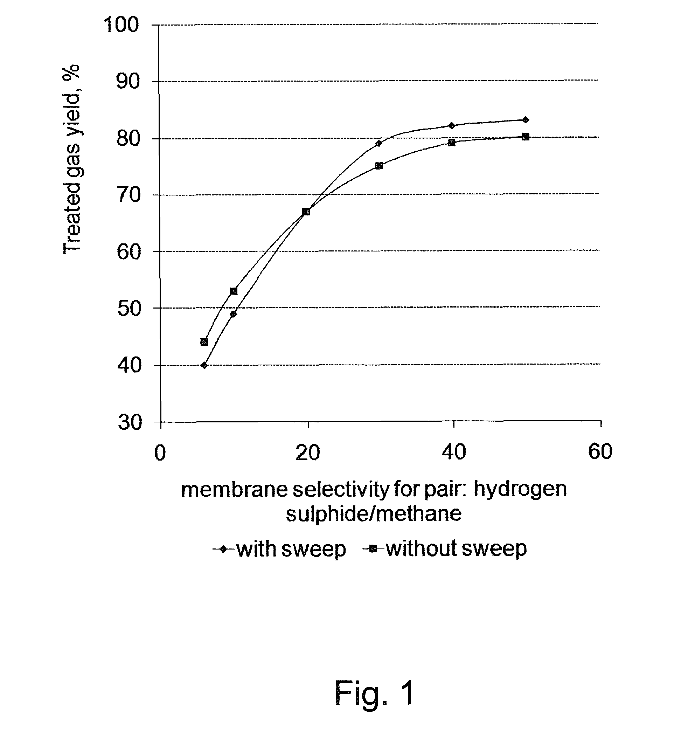

Selective properties of the SPM have decisive significance in the processes of the membrane gas separation. This can be illustrated by the results of numerical modeling of the hydrogen sulphide recovery process from multi-component hydrocarbon mixture represented at fig.1 , from which it results that at actual pressure drops at SPM the product yield (treated gas mixture with the required specifications) per hydrogen sulphide (7 mg/m³ per OST 51.40-93), primarily depends on the selectivity values a(H₂S)/(CH₄), herewith the acceptable yields ≥ 80% can be achieved only at α (H₂S)/(CH₄) ≥ 50. Membranes with such selectivity do not exist at the present time. Therefore it is necessary to find approaches to increase the gas separation efficiency and to improve the gas separation plants characteristics for implementation of the energy-demanding single-stage membrane separation process. One of these methods is purging of MGSM LPV for decreasing of the partial pressure of the unwanted component downstream a selectively permeable membrane.

The method of gas mixture separation is known from description to the RF patent for invention Nº 2132223, wherein membrane gas separation units (MGSU) with high pressure volume (HPV) and low pressure volume (LPV) are used, separated by the SPM, feedstock (HPMG) goes to the inlet of MGSU HPV, and part of the retentate selected at the outlet of HPV goes to purging of LPV in the counter-flow mode. The aim of the known technical solution is minimization of the membrane area for single-component treatment, i.e. increase of the membrane efficiency. However the decrease of the SPM total area proportional to the increase of efficiency SPM in the plant with certain efficiency on the product treated from one of the components only does not allow to practically obtain the product that would correspond with the requirements on the limiting contents of several non-desirable components. Concentrations of non-desirable components even though are small, but as a rule differ from each other significantly. If the feedstock contains one component in concentration, for example, 0.01 g/m³, and another one in concentration, for example, 0.1 g/m³, then with comparable selectivity of SPM to both components, the plant with reduced area of SPM will not be efficient for treatment of the product from the second component, in comparison with the plant without purging, wherein SPM has large total square area.

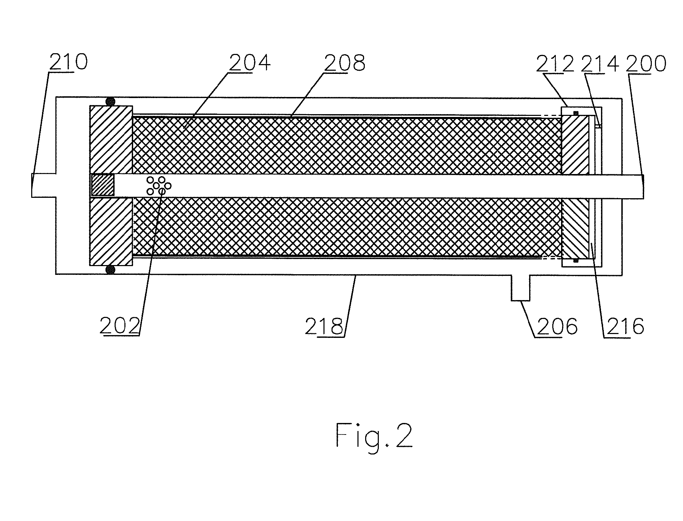

As the modeling results show as provided at fig.2, at set pressure of the initial gas and set ratio of pressures in HPV and LPV of MGSU b = P(high)/P(low) = 20 the purging of LPV with part of retentate (approximately 15 %) increases the product yield (natural gas depleted from the hydrogen sulphide) at application of membranes with selectivity of more than 20, herewith at application of membranes with selectivity of less than 20 the yield of the product decreases. The provided results make clear that the LPV purging significantly increases the product yield with the required characteristics of hydrogen sulphide. In particular, the product yield increases 80% for the actually existing membranes with selectivity a (H₂S/CH₄) ≈ 40. Thus the task of the single-stage treatment of hydrocarbon mixture from hydrogen sulphide is solved only by membranes with high selectivity and at purging of LPV.

Relations, given at fig. 1 , are universal and apply to any impurity (water, merkaptans, helium, C₅+ etc.), excluded from the hydrocarbon mixture.

The aim of the invention is to obtain methods and plants for treatment of the high pressure gas mixture simultaneously from several components of different chemical origin, even if the quantative contents in the feedstock vary significantly and also to increase the efficiency of this treatment process.

### DISCLOSURE OF THE INVENTION

Terms and expressions used in this text have the following meaning. Retentate denotes non-permeable gas flow, depleted of the high permeable components (HPC) and enriched with low permeable components (LPC). The permeate is the gas flow that permeated enriched with high permeable components.

The membrane gas separation module (MGSM) is a plant for the separation (treatment) of HPMG containing high pressure volume (HPV) and low pressure volume (LPV), separated from each other by a selectively permeable membrane (SPM). The term volume is referred to chambers, sections, channels or any known media for supply of the gas mixture with high content of HPC at SPM and collection of the gas mixture permeated via SPM with decreased content of HPC. One of the possible particular forms of the MGSM implementation is shown at fig.2 and described in the text below.

The membrane gas separation unit (MGSU) is a plant containing at least one MGSM or, at least, two MGSM, inputs and outputs of which are interconnected for the mutual feed or takeoff of the gas mixtures into/from MGSU and/or for distribution of the intermediate flows of gas mixtures between MGSMs inside MGSU. HPV and LPV of different MGSMs in MGSU can be connected in parallel, in series, parallel-and-in-series and/or in series-and-parallel based on gas flows.

Head MGSU in plants containing several MGSUs refer to MGSUs at inlet of HPV whereof HPMG is supplied with increased (in relation to flows supplied at inlet of HPV of other MGSUs) contents of HPC. In other words, if, for example, the plant contains, at least, two MGSUs, then the first MGSU at the treated HPMG flow is the head MGSU.

Tail MGSUs in plants containing several MGSUs, refer to MGSU, at inlet of HPV whereof HPMG is supplied with decreased contents of HPC (in relation to flows supplied to inlet of HPV of other MGSUs). In other words, if, for example, the plant contains, at least, two MGSUs, then the last MGSU downstream the treated HPMG flow is the tail MGSU.

High pressure volume (LPV) is a chamber, section and/or any structurally isolated space dedicated mainly for connecting of HPMG, to the SPM, of at least, one MGSM.

Low pressure volume (LPV) is a chamber, section and/or any structurally isolated space dedicated mainly for collection and takeoff of the gas flow permeated via the SPM, of at least one MGSM.

The purging gas (or the purging gas flow) is referred to part of retentate, selected at the outlet from HPV, of at least, one MGSM and/or MGSU, which is used for purging of LPV, of at least, one MGSM.

The discharge flow (discharge gas or discharge) is referred to gas flow, selected from LPV, of at least, one MGSM and/or MGSU and that is represented by permeate or mixture of permeate and purging gas.

The product is referred to gas flow, namely, retentate, selected at outlet from LPV, of at least, one MGSM and/or MGSU, with the required composition (in quality and quantity).

The semi-product is referred to the gas flow, namely, retentate, selected at the outlet of HPV of one or several MGSUs and/or MGSMs, except the tail ones.

Vacuum compressor (VC) is a plant for decreasing of pressure and supply of gas mixture from its inlet to its outlet at increased pressure.

Gas mixture of high pressure (HPMG) refers to gas mixture, supplied at inlet of MGSM or MGSU HPV for further treatment from HPC.

Selectively permeable membrane (SPM) is a layer of material providing different rates of permeability of different components at the gas mixture of different chemical origin.

Other terms and expressions have meanings as regular for the context and the given technical field.

Technical result consists of the possibility of the simultaneous feedstock treatment (HPMG) from one or several HPC(s) (in particular, helium, hydrogen sulphide, merkaptans, carbon dioxide, water and/or heavy hydrocarbons), increase of the treatment efficiency (i.e. interrelation between total area of the SPM in the plant, its efficiency and specific energy capacity of gas separation); possibility of use (processing or treatment) of the feedstock with higher contents of HPC.

The above mentioned technical result is achieved by implementation of the plant operation type for treatment of the high pressure mixed gas (HPMG) from high permeable components (HPC), containing membrane gas separation units (MGSUs) with the high pressure volume (HPV), with low pressure volume (LPV) and selectively permeable membrane (SPM), installed between cavities, wherein LPV, of at least, one of the MGSU is continuously purged by the treated gas mixture (semi-product or product), herewith it the pressure drop between the mentioned volumes of this MGSU, and also consumption of the treated gas mixture directed to purging, is sustained at the level so that the content of each of HPCs in the product does not exceed the desirable values.

From the above mentioned we see that the increase of efficiency of treatment of the high pressure mixed gas is attained by the limiting selectivity of the existing SPM. Besides, purging of LPV allows to increase product yield only at values of selectivity SPM for all components above the certain limit. Herewith high product yield is achievable due to non-linear dependency of selectivity of the SPM with any of the components from the operating pressure drop between high and low pressure cavities, only due to the selection of the certain pressure drop between LPV and HPV and certain ratio of the purge gas and permeate flow treated simultaneously from several components of mixed gas, without increase of the stages number and use of the additional active equipment. Also, in some cases, for increase of the gas separation efficiency it may be useful to provide high absolute pressure values in cavities (for example, for increasing delta in the concentration of the permeating components in gas mixtures at different sides of SPM) together with provision of the certain pressure drop in between the volumes.

The gas separation is done so that the value of the ratio of specific permeabilities of SPM (amount of matter or gas volume, permeated via area unit of SPM at the time unit at unit pressure, mole/m² sec Pa or m³/m² sec Pa) at each high permeable component to the specific permeability of SPM in relation to all LPCs and/or to main LPC exceeded the ratio of pressures in the high pressure volume and low pressure volume of MGSU.

High pressure cavities of several membrane gas separation units of the plant can be connected between each other differently, in particular, in series.

To HPV, of at least, one of the MGSU, HPV of at least, one additional MGSU may be connected in parallel, or, at least, one membrane gas separation unit (MGSU) contains, at least, two membrane gas separation modules (MGSM), each of them in its turn contains high pressure volume (HPV), low pressure volume (LPV) and the SPM, installed between them, herewith this inlets and outlets of LPV and HPV of the mentioned MGSU or inputs and outlets of the mentioned MGSMs are interconnected in parallel.

Gas mixture (discharge flow) from LPV outlet of at least one of MGSU can be supplied to inlet of HPV of another MGSU by purging of both MGSU with semi-product of LPV.

For provision of optimum pressure, gas mixtures supplied to HPV inlet of at least first of the head MGSU can be preliminarily compressed.

In one of the particular forms of accomplishment gas mixture supplied to HPV inlet can be pre-cooled for example for removal of the excessive heat generated after gas compression or for water vapours or hydrocarbons condensation.

Gas mixtures supplied to the HPV inlet can be pre-treated and filtrated for example for condensed moisture or mechanical contamination removal.

Mixed gas supplied to the inlet of the HPV can be pre-heated for example after pre-cooling and before supply of mixed gas to high pressure volume of MGSU. It is preferred when the mixed gas is heated to temperature at which the maximum efficiency of the used SPM is provided.

Mixed gas, supplied at inlet of HPV, may be preliminarily compressed and/or be preliminarily compressed, and then cooled and then separated, and then filtrated and/or preliminarily compressed, then cooled after that separated then filtered and then heated.

The pressure drop can be generated in the LPC, of at least the first of the head MGSU.

It is preferred when the mentioned pressure drop is generated in LPV of the head MGSU.

Purging can be organized in particular in such a way so that the treated gas mixture from the HPV outlet of at least one of MGSU is used for purging of the LPV of at least one of the preceding MGSU. I.e. product or semi-product from the HPV outlet of at least one of the MGSU can be used for purging of the LPV of at least one or more preceding MGSUs. It can be useful for example for decrease of non-productible hydraulic losses at retentate throttling from the HPV to adjoining LPV for retentate pressure release (purging flow) as the retentate pressure (purging flow) in the tail stages usually (if retentate is not compressed in between MGSUs) closer to pressure that is necessary to be provided in the LPV than the retentate pressure from the head MGSU due to natural hydraulic losses in MGSM. Besides it allows to increase the motion force of the separation process in the head MGSUs as in this case the LPV will be purged with cleaner retentate than retentate from the head MGSUs HPVs.

Herewith it is preferable when treated gas mixture from the HPV outlet, of at least one MGSU is purged with LPV, of at least the first of the head MGSU.

Pressure of gas mixture directed to LPV purging as a rule is decreased beforehand. The pressure decrease may not be needed if part of the retentate with low pressure at the outlet from HPV of the MGSU of the tail stages is used as the purging gas.

Gas mixtures from the outlet of the LPV of at least one MGSU can be directed to the HPV inlet of at least one of the preceding MGSU for the further re-processing thus providing recycling and reducing emissions.

It is preferred when mixed gas from outlet of LPV of at least one MGSU is directed to HPV inlet of at least the first of the head MGSU.

Pressure of the treated gas mixture before purging of LPV can be decreased by different means, for example, by throttling unit, porous body or nozzle tip.

If the SPM capacity is influenced not only by the pressure drop between HPV and LPV of the MGSU but also by absolute pressure values in MGSU cavities (gas compression increases components concentration and diffusion rate via SPM), in this case increase of pressure in HPV in order to prevent SPM damage may be compensated by adequate pressure increase in LPV so that it provides not only high pressure drop (not exceeding strength limit of SPM) but also high components concentration in HPMG.

Treated mixed gas (purge gas) can be directed to purging by compressor or vacuum compressor.

If MGSU capacity is increased by increase of absolute pressure values not only in HPV but also in LPV (at pressure drop preservation not exceeding the strength limit of the SPM), then purging of LPV with retentate from tail MGSUs by a compressor or vacuum compressor (if it is needed for increase of retentate pressure from tail MGSU till the required value) may provide for additional improvement of the gas separation efficiency.

Pressure release in LPV may be generated by vacuum compressor.

Selectively permeable membranes used in the above described method may be provided as semi-permeable hollow fibers or flat membranes installed at frame or spiral wound membranes. Hollow fiber membranes are preferred.

The discharge flow can be handled differently. The mixed gas from the LPV outlet (discharge flow) of at least one MGSU can be used for power supply (if the latter contains sufficient amount of flammable hydrocarbons) and/or can be compressed and directed to utilization and/or storage and/or pumped into the natural horizon (for example, for increase of its productivity) and/or can be reprocessed.

The treated gas mixture from the HPV at least one MGSU is directed to the Consumer. Retentate from the outlet of the tail MGSU (with contents of all components not higher than the specified values) or retentate of intermediate MGSUs or their mixture can be used as product depending on the aim.

It is preferred when the treated mixed gas is directed to the consumer from HPV of at least one of the tail MGSUs, preferred from HPV of the tail MGSU.

In order to increase the feedstock processing rate condensate generated at separation can be stabilized with separation of the stabilized gas, hydrocarbon condensate and water.

Stabilized gas can be directed to the HPV inlet of at least first of the head MGSU preferably to HPV inlet of the first MGSU.

The flows generated at stabilization can be handled differently. It is preferred that the discharge gas generated during stabilization is directed to utilization, stable hydrocarbon condensate is directed to re-processing or downhole injected and water condensate is downhole injected for maintaining of formation pressure or is directed to utilization.

The above-described method can be implemented by a unit containing two MGSUs in which HPMG is supplied to HPV of first MGSU, gas mixture from HPV of the first MGSU is supplied to HPV of the second MGSU, gas mixture from outlet of LPV of the second MGSU is directed to HPV of the first MGSU to HPV of the first MGSU, LPV of the first and the second is continuously purged with gas mixture of HPV of first and second MGSU correspondingly pressure in the LPV of the first and second MGSU is decreased by a vacuum-compressor.

Alternatively for implementation of the above described method, the LPV of the first MGSU is purged with gas mixture from the outlet of the HPV of the first MGSU and/or from the HPV outlet of the further MGSU and/or decrease pressure in LPV of the first MGSU herewith gas mixture from its outlet (LPV of the first MGSU) is directed to the HPV inlet of the second MGSU and/or the HPV inlet of further MGSUs.

The above described method can also be implemented with a plant containing two MGSUs in which HPMG is supplied to inlet of HPV of the first MGSU, gas mixture from the HPV outlet of the second MGSU is continuously used for purging of the LPV of the first and/or second MGSU and/or decrease of pressure in LPVs.

The above described method can be implemented with a plant containing two MGSUs wherein HPMG is supplied to HPV of the first MGSU, gas mixture from the outlet of HPV of the first MGSU is continuously used for purging of LPV of the first MGSU and the other part of the gas mixture is supplied to the HPV inlet of the second MGSU herewith the pressure is decreased in the LPV outlet of the second MGSU and the gas mixture from LPV of the second MGSU is directed to the inlet of HPV of the first MGSU.

It is preferred when at implementation of the above described method the consumption of the treated gas mixture that is used for purging of the mentioned LPV (consumption of the purging gas flow) and/or pressure in LPV is set so that to provide the compliance of the product with the requirements of contents of each of HPCs.

It is more preferable when the mentioned pressure is set so that to provide the desirable degree of treatment for each HPC.

Even more preferable when the consumption of the treated gas mixture directed to purging (consumption of the purging gas flow) is selected so that the product yield with contents of each HPC not increasing the desirable values shall be increased of at least at the consumption value of the treated gas mixture directed to purging.

The above mentioned technical result is also achieved in the process of functioning of the high pressure mixed gas (HPMG) from high permeable components (HPC), containing membrane gas-separation units (MGSUs) with high pressure volume (HPV), low pressure volume (LPV) and selectively permeable membrane (SPM), installed between them that is equipped with means of the pressure regulation in HPV and LPV, with envisaged possibility to maintain this pressure drop of at least, in one of the mentioned MGSUs, and purging means of LPV with treated gas mixture (semi-product or product), herewith the mentioned means are designed so that to provide the pressure drop between HPV and LPV and consumption of the treated gas mixture that is used for LPV purging, at which the contents of each of the indicated HPC in the product do not exceed the desirable values.

In the preferred implementation option the LPV of at least one MGSU is equipped with the means of pressure release.

In one of the particular options the LPV of at least one MGSU is equipped with methods of pressure release and is accomplished with possibility of purging of the treated mixed gas.

In another particular options of MGSU HPVs are connected between each other in series, herewith LPV of at least one of tail MGSUs is connected with HPV inlet of at least one of the head MGSUs for return of discharge flow to the process main. It is preferred when LPV of tail MGSUs are connected with HPV of the main MGSU.

In another particular option of implementation the HPV inlet of at least one of MGSUs is connected with LPV outlet of at least another MGSU via compressor, refrigerator, separator and filter. This allows to return the discharge flow to the gas separation process after its pre-treatment from easily condensed components.

In the particular option of implementation inlets and outlets of HPV of at least two MGSUs can be connected between each other in parallel for example for increase of efficiency of the gas separation stage.

In the preferred option of the implementation refrigerator, separator and filter are installed at inlet of HPV of the first of MGSUs. This allows to pre-treat high pressure mixed gas from easily condensed components.

In more preferable form of implementation the mentioned separator is equipped with condensate stabilization unit with outlets for stabilized gas for discharge gas, for water condensate and for stabilized hydrocarbon condensate.

In even more preferable option of implementation the outlet of the mentioned stabilization unit for stabilizing gas is connected with the HPV inlet of first MGSU for return of the stabilized gas to the gas-separation process head.

The above mentioned technical result is also achieved in the process of application of the above-mentioned method for simultaneous treatment of the high pressure natural and associated gas of at least from two high permeable components.

It is preferred when the natural gas is treated from components selected from group that includes water vapour, carbon dioxide, carbon monoxide, hydrogen sulphide, merkaptans and helium.

The above mentioned technical result is also achieved in the process of application of the above mentioned method for helium recovery from the high pressure natural gas.

The principles of the method implementation are visually explained at the example of particular and concrete options described below.

### BRIEF DESCRIPTION OF THE DRAWINGS FIGURES

Fig. 1 represents the schematic drawing of MGSM (replaceable cartridge) in which the purging of the inside fiber area is provided by part of retentate.
Fig. 2 depicts the schedule that illustrates dependency of the mixed gas treated to the required contents of HPC at outlet and the SPM selectivity.
Fig. 3 depicts the scheme of the plant with connection of MGSUs in series wherein semi-product from the first stage of MGSU is directed to the inlet of the second stage MGSU etc.
Fig. 4 depicts the scheme of two-stage plant with compressor at inlet to HPV MGSU of the first stage wherein the recycling is provided (return to the gas-separation head process) of the discharge flow from LPV MGSU of the second stage.
Fig. 5 depicts the scheme of single-stage plant for high pressure mixed gas treatment wherein the purging and vacuuming of LPV membrane gas separation unit is provided.
Fig. 6 depicts the scheme of single-stage unit for high pressure natural gas treatment from helium wherein the purging and vacuuming of LPV of membrane gas-separation unit is provided.
Fig. 7 depicts the scheme of two-stage unit for treatment of high pressure gas mixture with connection of both stages of MGSUs in series between each other.
Fig. 8 depicts the two-stage scheme for high pressure mixed gas treatment till parameters of its consumption with connection of MGSU of both stages between each other in series.
Fig. 9 depicts the two-stage plant scheme for high pressure mixed gas treatment with connection of stages between each other in series wherein each stage contains separate membrane gas separation units connected between each other in parallel.
Fig. 10 depicts a two-stage unit for high pressure natural or associated petroleum gas wherein the discharge flow from the first stage is treated at the second stage.

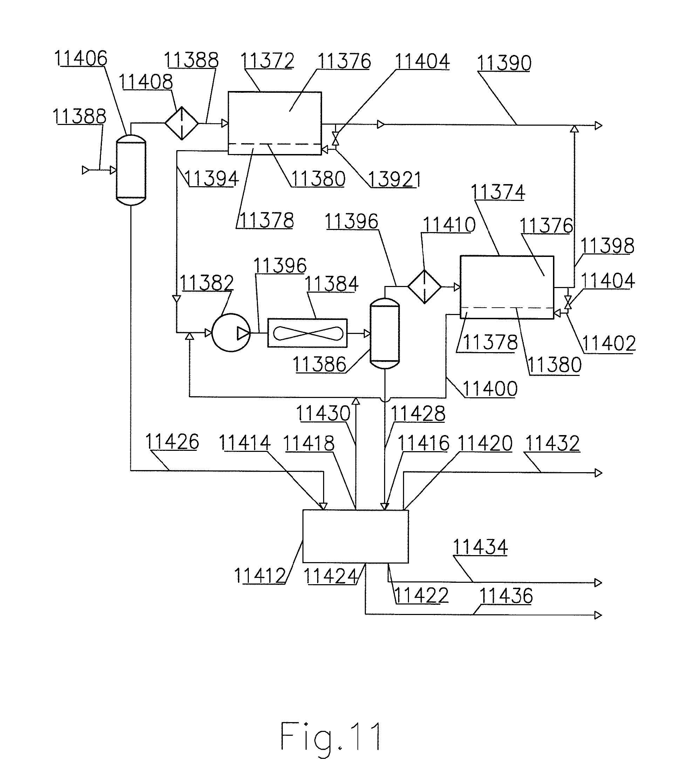

Fig. 11 depicts the two-stage unit scheme for drying of high pressure natural or associated gas wherein the discharge flow of the first stage is being treated at the second stage.
Fig. 12 depicts the two-stage unit scheme for drying of high pressure natural or associated petroleum gas wherein the discharge flow from the first stage is treated at the second stage.

### DATA CONFIRMING INVENTION USABILITY

Taking into account the dependency of SPM selectivity from pressure drop the yield of the product with required contents of water vapours, merkaptans, hydrogen sulphide and hexane is increased due to purging of LPV with retentate only at such pressure drop that provides selectivity no lower than the set value (no lower than 20 for hydrogen sulphide as shown at fig. 1). Herewith the relation of the purging gas flow to permeate flow is chosen on the account of necessity of rating of the most hard-to-remove component. In this case the contents of the other components will correspond with the specified standards.

Membrane gas-separation units may be constructed by unifying membrane gas-separation modules (MGSM), depicted at fig. 1. The feedstock is supplied under pressure to axial manifold MGSM 200 and via holes at 202 manifold end is directed to inter-fiber space of module 204 (MGSM HPV). The gas is transported along SPM to outlet 206. Most part of SPM is covered with film non-permeable for gases 208. HPC from HPV via SPM penetrate to LPV and migrate to outlet from LPV (permeate outlet) 210. It is preferred when flows of HPV and LPV are transported along SPM by counter-flow. Cover 212, hermetically fastened at body 218 is located at the end of the MGSM opposite the permeate outlet. The cover has a hole for 214 replaceable nozzle tips installation. Treated gas via nozzle tip is supplied inside the fibers (MGSM LPV) and is used for purging of MGSM LPV 216.

Purging leads to decrease of concentration of HPC in LPV, thus increasing the gases partial pressure drops between HPV and LPV. As the driving force of the separation process is the gases partial pressure drops at SPM, the treatment process of HPMG from HPC is improved. At the same time the concentration of components with low permeable along SPM is changed insignificantly, and partial pressure drop also decreases insignificantly. Decrease of partial pressure drop declines the treatment process of HPMG from LPC.

The value of permeate flow for every single fiber at set pressure drop on it depends only on temperature of permeating gas mixture and composition of the permeating gas. The value of the purging gas flow in the first turn depends on the nozzle tip geometric sizes (orifice diameter and length), pressure drop at it and hardly depends on temperature and viscosity of gas flowing via nozzle tip. Thus the easiest way to change the ratio of permeating and purging gas flow is by changing the geometric sizes of the nozzle tip.

Mixed gas at the outlet from LPV is the discharge flow. The ratio of this flow to the flow of HPMG (at identical product parameters) determine the efficiency of the treatment process. The lower the ratio is the more efficient is the operation of MGSM. From the above said it follows that it is necessary to optimize the ratio of the permeating and purging flows for provision of the necessary gas treatment from HPCs. The setting of ratios between permeate flow and purging gas flow is carried out during manufacturing of MGSMs on the basis of results of the treatment process numerical modeling and preliminary testing of MGSM.

If product with set contents of all HPCs can not be obtained in single-stage process then more complicated treatment schemes are used, in particular schemes with connection of MGSMs in series when the semi-product of the first stage is directed to the MGSU inlet of the second stage etc.

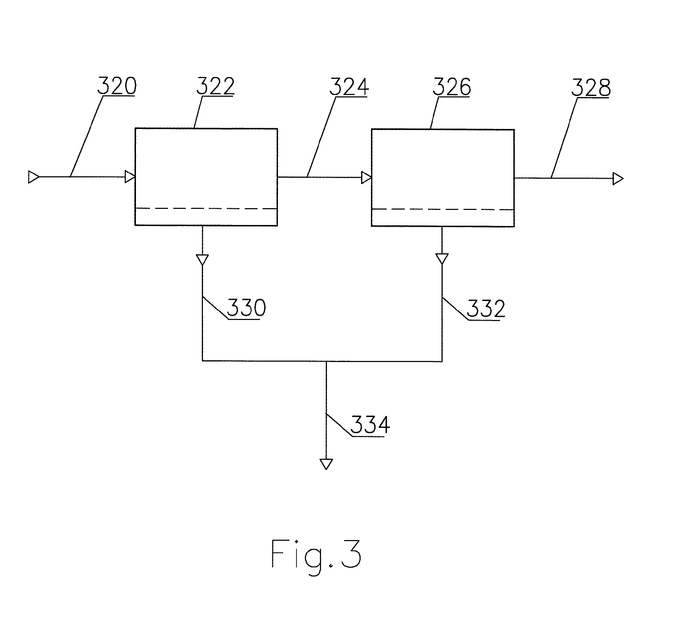

Principal scheme of such MGSU connection is shown at fig. 3.

As shown as fig. 3 the feedstock (HPMG) via pipeline 320 is supplied at the MGSU inlet of the first stage 322, semi-product from the first stage via pipeline 324 goes to the second stage 326 MGSU inlet, whereof product 328 with set concentrations of components is directed to the consumer. Permeate 334 from the first 330 and from the second stage 332 is the discharge flow. The number of stages may be more than two. These schemes are often applied if the feedstock is under pressure. As matter of actual practice each stage in gas-separation units may consist of several connected in parallel MGSMs and/or MGSUs. At set pressure and temperature of HPMG the number of MGSMs and/or MGSUs in MGSU of each stage is determined by consumption of HPMG and the selection ratio i.e. the ratio of the feedstock and product flows.

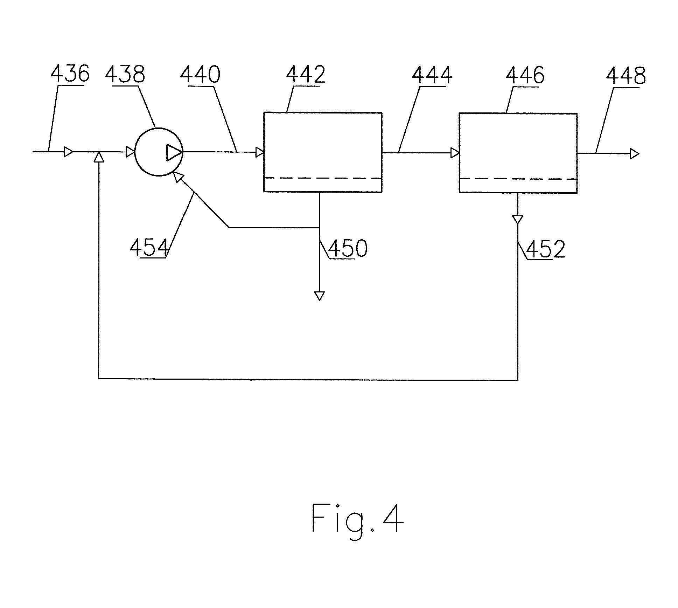

The scheme with recycling can be used for example as shown at fig. 4 if the feedstock is compressed before supply to MGSU. In line with this scheme the feedstock 436 is combined with permeate of the second MGSU 452, is compressed by compressor 438 and generated HPMG by pipeline 440 is supplied to the inlet of the first MGSU 442 whereof retentate by pipeline 440 is supplied to the inlet of the second MGSU 446. The product from the second MGSU 448 is directed to the consumer. Permeate of the first MGSU 450 is utilized and permeate of the second MGSU 452 is supplied to the inlet of the second MGSU 446. The product from the second MGSU 448 is directed to the consumer. Permeate from the first MGSU 450 is utilized and permeate from the second MGSU 452 is supplied to the compressor inlet. For membrane gas-separation units with recycling (i.e. with permeate return to the gas-separation process head) only the permeate of the head MGSU(s) is the discharge flow (i.e. the first MGSU or several head MGSUs including the first one).

The discharge flow may be collected for additional treatment at oil petroleum or chemical plants and used for ones own needs for example it can be burned for indoor heating or for heating of intermediate gas flows depending on the discharge flow composition.

In line with the option represented at fig. 4 the permeate is returned to the process head from the second stage 452. In addition to this permeate of the first stage by pipeline 454 may be supplied to compressor 438 supply. In this case the number of MGSU and/or MGSM of the first stage and operation conditions are selected in such a way that the permeate flow would correspond with the volumetric gas consumption necessary for the compressor supply.

### EXAMPLE 1

### TREATMENT OF HIGH PRESSURE ASSOCIATED GAS FROM THE WATER VAPOURS AT SINGLE-STAGE UNIT

Feedstock (HPMG with pressure of 60 bar with content of water 0.07% mole, methane 93.6 % mole, CO2 2.9 mole, other: hydrocarbons C2 - C5) is supplied via the inlet pipe union inside the plant containing MGSU with MGSMs connected in parallel on the basis of hollow fibers (structure of MGSM is shown at fig. 1 and described above). The feedstock is supplied to MGSM HPV (inter-fiber space). Part of the gas (permeate) from HPV permeates via walls to LPV (internal fibers channels) when passing along the fibers. The product obtained at the outlet from the HPV (retentate) is separated into two parts. The main part is deviated via the corresponding pipe piece with pressure of 59 bar. The less part (purging gas flow) via the nozzle tip in the internal cover is supplied to the volume above the open part of fibers opposite the outlet pipe nozzle, whereof it is directed to the internal fiber channels and is combined with the permeate that permeated the fiber wall after that the obtained mixture of permeate and retentate is deviated from LPV via pipe nozzle under pressure of 2.0 bar.

The pressures ratio in volumes was P(high)/P(low) = 30, the specific permeability ratio (selectivity) on water and methane P/1(H₂O)/P/1(CH₄) = 280, thus P/1(H₂0)/P/1(CH4) >P(_{B})/P(_{H}), permeate percent in the feedstock flow is 4.6% ; the percent of product used for purging 2.9% from the feedstock; contents of water in the residual flow 0.0025 %mole, methane 94.6 % mole, C0₂ 2.4 % mole. The contents of water in residual flow without purging is 0.03 % mole, methane 94.6 % mole, C0₂ 2.4 % mole.

### EXAMPLE 2

### HIGH PRESSURE ASSOCIATED GAS TREATMENT FROM HYDROGEN SULPHIDE AT SINGLE-STAGE PLANT

The feedstock (HPMG with pressure of 20 bar and hydrogen sulphide contents of 0.02 % mole, methane 88.9 % mole, C0₂ 3.3 % mole, nitrogen 0.2 % mole, other: hydrocarbons C₂-C₅) was supplied via the inlet pipe piece inside the plant containing MGSU with MGSMs connected in parallel on the basis of hollow fibers (MGSM structure is shown at fig.1 and described above). Passing through fibers, high pressure mixed gas components from HPV (inter-fiber space) permeate via fiber walls to LPV (internal fibers channels), herewith the mixture is depleted of high permeable components, and the product obtained in the result (retentate) is split to two parts. The main part of the retentate is deviated via the corresponding pipe piece with pressure of 19 bar. Less part of the retentate (purging gas flow) via nozzle tip in the internal cover is supplied to the volume above the open part of the fibers opposite the outlet nozzle whereof the retentate is supplied to the channels inside the fibers and is combined with the permeate penetrated via fiber wall, thereafter the generated mixture is deviated via nozzle under pressure of 1.2 bar.

The ratio of pressures in cavities was P(high)/P(low) = 16, the specific permeability ratio (selectivity) per hydrogen sulphide and per methane P/1(H₂8)/P/1(CH₄) = 40, herewith P/1(H₂S)/P/1(CH₄) > P(B)/P(H); percent of permeate in the feedstock flow is 8.4 %, percent of product used for purging is 4.5% feedstock flow, hydrogen sulphide content in product is 0.003 % mole, methane - 91.1 % mole, C0₂ - 2.2 % mole., Percent of hydrogen sulphide in product without purging (MGSM with blind nozzle tips were used)was estimated as 0.008 %mole, methane -1 .1 %mole, C0₂-2.2%

### EXAMPLE 3

### TREATMENT OF HIGH-PRESSURE ASSOCIATED GAS FROM HEXANE AT SINGLE-STAGE UNIT

Feedstock (HPMG under pressure of 14 bar with contents of hexane 0.95 % mole, methane 70.5 % mole, water 0.55 % mole) via inlet pipe piece is supplied into the plant containing MGSU with MGSMs connected in parallel on the basis of hollow fibers ( MGSM structure is shown at fig.1 and described above). The feedstock enters MGSU HPV (inter-fiber space). When passing along fibers the components of the gas mixture from HPV permeate the fibers wall in LPV (internal channels of fibers). Product (retentate) is separated to two parts. The main part is deviated via the corresponding nozzle under pressure of 14 bar. The less part via the nozzle tip in the internal cover is supplied to the volume above the open part of fibers, opposite the outlet nozzle whereof it is directed to purging of the internal fibers channels where it is combined with the permeate that permeated via the fiber wall. The generated gas mixture is deviated via the nozzle under pressure of 1.2 bar.

The ratio of pressures in cavities of MGSM was P_{(B)}/P_{(H)} = 12,5, the specific permeability ratio (selectivity) per hexane and methane P/1 (C₆H₁₄)/P/1 (CH₄) = 25, thus P/1(C₆H₁₄)/P/1(CH₄) > P(high)/P(low); part of permeate is estimated as 1 1.5% of feedstock flow, the percent of gas via nozzle tip 4.5% of feedstock flow; hexane content in product is estimated as 0.15 %mole, methane 75.5 %mole, water 0.08%mole. Without purging (MGSM with blind nozzle tips were used) the hexane content in product is estimated as 0.27 %mole, methane 75.5 %mole, water 0.24 % mole.

### EXAMPLE 4

### SINGLE-STAGE PLANT WITH PURGING AND VACUUMING OF THE LOW PRESSURE VOLUME OF MEMBRANE GAS-SEPARATION UNIT FOR THE HIGH PRESSURE GAS MIXTURE TREATMENT

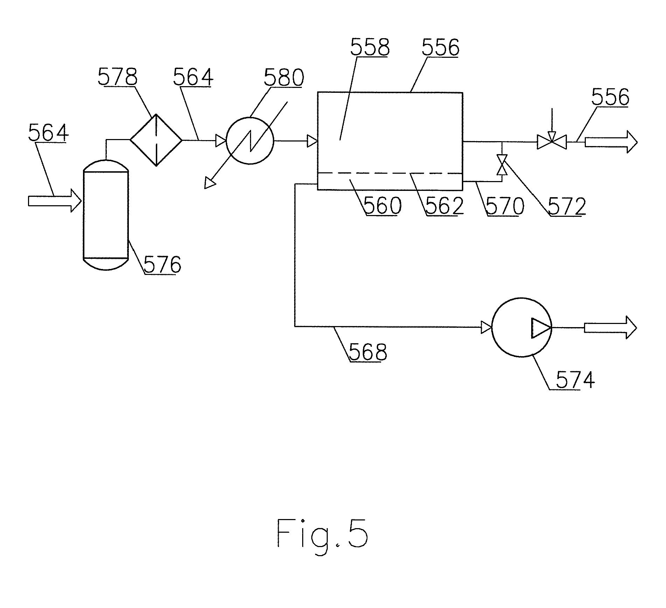

As shown at fig. 5 the unit contains MGSU 556 with HPV 558 and LPV 560, separated by SPM 562. The feedstock (HPMG) 564 is supplied to HPV 558 MGSU 556, the product (retentate) is taken from HPV outlet 566, and the discharge flow is deviated from the LPV outlet (mixture of permeate and purging gas) 568, part of product 570 (purging gas) after its throttling in nozzle tip 572 is used for purging of LPV 560, and pressure in LPV 560 is decreased by vacuum-compressor 574, thus providing a possibility to change the pressure ratio of gas flows in HPV 558 and LPV 560.

If necessary the feedstock is separated in separator 576 and/or filtrated at filter 578 for condensate and mechanical mixtures removal and also heated in heat-exchanger 580 before the feedstock is supplied to MGSU 556.

The consumption of purging gas 570 and pressure drop between HPV 558 and LPV 560 is selected from the conditions of maximum product yield and minimum specific energy consumption for the treatment process. Thus the increase of the separation efficiency of the LPV with the minimum energy consumption is provided due to purging .

The contents of the non-desirable mixtures in product may be decreased in two or more times.

### EXAMPLE 5

### TREATMENT OF NATURAL GAS FROM HELIUM AT PLANT PER EXAMPLE 4

The feedstock and namely crude natural gas under pressure till 10 MPa, containing 0.6 % mole helium, is supplied to MGSU. Before supply of the feedstock to MGSU it (feedstock) is separated and filtrated for removal of condensate and mechanical impurities and then is heated till temperature of 50°C. The product with contents of helium of 0.1 % mole from MGSU under pressure of 9.8 MPa is directed to consumer. Approximately 5 % of product (retentate), is directed to MGSU for purging of LPV. Mixed gas at the outlet of LPV (discharge flow) with contents of helium 4,5=5 % mole with pressure of 0.05 MPa, provided by the vacuum compressor that then compresses mixed gas up to the pressure of 15 MPa. The discharge flow is directed either to utilization into the storage area, or is injected to the natural bed, or is re-processed. The capacity of vacuum compressor and throttling parameters of purging gas are chosen on condition of maintaining of pressure drop in MGSU cavities.

### EXAMPLE 6

### TREATMENT OF NATURAL GAS FROM HYDROGEN SULPHIDE AT THE PLANT PER EXAMPLE 4

Feedstock, namely natural gas with pressure of 2.5 MPa and temperature of 25÷ 30°C, containing 150 mg/m³ of hydrogen sulphide, is supplied to MGSU. Preliminarily the feedstock is treated from condensate and mechanical impurities. The type of filter being used is a coalescing filter. The product with the content of hydrogen sulphide no more than 20 mg/m³ under pressure of 2.2 MPa is directed to the consumer. The part of product, approximately 5%, is directed to MGSU for purging of LPV. The discharge flow collected from the LPV outlet, contains hydrogen sulphide up to 1500 mg/m3 and has pressure of 0.1 MPa, provided by the vacuum compressor and then mixed gas (flow) is compressed till pressure of 0.2 MPa.

The capacity of the vacuum compressor and purging gas throttling parameters are chosen on the basis maintaining the optimum pressure drop in MGSU cavities.

### EXAMPLE 7

### TREATMENT OF NATURAL GAS FROM THE WATER VAPOURS AT THE PLANT PER EXAMPLE 4

The feedstock namely natural gas under pressure of 2.8 MPa temperature of 45°C with relative humidity (per water) 100% is supplied to MGSU. The feedstock is separated and filtrated for removal of condensate and mechanical impurities before supply of the feedstock to MGSU. The product is supplied to the consumer with contents of water no higher than 0.012% mole (that corresponds with the temperature of the dew point per water of minus 10°C at the above-indicated pressure). Part of product (purging gas) approximately 6% is directed to MGSU for purging of LPV. The discharge flow contains up to 3.0% mole of water.

The vacuum compressor provides for pressure decrease in LPV till 0.05 MPa and supply of the discharge flow for the further reprocessing under pressure of 0.15 MPa. The efficiency of the vacuum-compressor and throttling parameters of the purging gas are selected from the condition of maintaining the optimum pressure drop in MGSU cavities.

### EXAMPLE 8

### TREATMENT OF NATURAL GAS FROM HYDROCARBONS CONTAINING 4 AND MORE CARBON ATOMS AT THE PLANT PER EXAMPLE 4

The feedstock namely associated petroleum gas under pressure of 1 .6 MPa with contents of hydrocarbons C₄₊ 8.0 % mole is cooled till temperature of 20°C in the refrigerator. Then before supply to MGSU the associated gas is consequently treated from condensate and mechanical impurities in a separator and a coalescing filter. The treated gas is supplied to the inlet of HPV MGSU, and product with contents of hydrocarbons C₄₊ no more than 2.0 % mole is directed to the consumer. Part of product (purging gas) is directed to MGSU for purging of LPV. The discharge flow contains 15% mole of C₄+ hydrocarbons.

The vacuum compressor maintains pressure in LPV up to 0.04 MPa and supplies the discharge flow for the further re-processing under pressure of 0.12 MPa. The capacity of vacuum compressor and natural gas throttling parameters are chosen on the condition of maintaining optimum pressure drop in MGSU cavities.

### EXAMPLE 9

### TREATMENT OF THE HIGH PRESSURE NATURAL GAS FROM HELIUM AT THE SINGLE-STAGE UNIT WITH PURGING AND VACUUMING OF LOW PRESSURE VOLUME OF THE GAS-SEPARATION UNIT

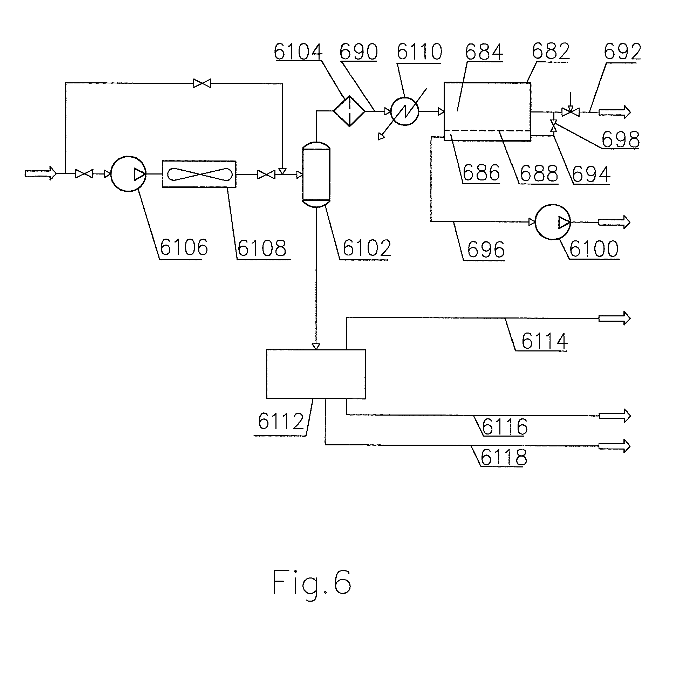

As shown at fig.6 the plant for treatment of natural gas from helium contains MGSU 682 with HPV 684 and LPV 686, separated by SPM 688. HPV 684 from one side is connected with pipeline 690, and with pipeline 692 from the opposite side. LPV 686 is connected with purging channel 694, interconnected with pipeline 692 and pipeline 696, herewith a throttling element 698 is installed in the purging channel 694. Vacuum-compressor 6100 is installed at pipeline 696 and provides for the possibility of pressure release in LPV 686 and supply of the gas mixture from LPV 686 to utilization in the storage area or either for downhole injection or for further treatment. The plant can be equipped with separator 6102 and filter 6104 installed in series at supply pipeline 690for treatment of natural gas from condensate and mechanical impurities. Compressor 6106 and refrigerator 6108 can be installed in series upstream separator 6102 at supply pipeline 690. Besides it may be equipped with heater 61 10, installed at the supply pipeline 690 directly upstream MGSU 684. The unit may be equipped with condensate stabilization unit 61 12, connected by its inlet with the condensate outlet of 6102 separator and with three outlets , the first of which is connected to pipeline 61 14 of gas discharge to utilization or flaring, the second one is connected to pipeline 61 16 of the hydrocarbon deviation to the further reprocessing or for downhole injection and the third one is directed to pipeline 61 18 for water condensate removal.

The feedstock i.e. high pressure natural gas with helium contents of 0.2÷1.0 % mole, is supplied to HPV 684 MGSU 684 by pipeline 690. Preliminarily the feedstock is treated from condensate and mechanical impurities in separator 6102 and filter 6104, the latter can be of a coalescing type. The feedstock temperature before supply to MGSU 682 may be increased in heater 61 10. In case of feedstock low pressure the feedstock is preliminarily compressed in compressor 6106 and then cooled in refrigerator 6108. Pre-treated feedstock is supplied to HPV 684 MGSU 682, from which product with helium contents of 0.1 % mole is directed to the consumer by pipeline 692. Part of product (purging gas) from pipeline 692 per channel 694 with throttling element 698 is directed to LPV 686. The discharge flow with contents of helium 1.5÷5.0 % mole is deviated from LPV 686 by pipeline 696 by vacuum-compressor 6100, providing pressure decrease in LPV 686 and supply of the discharge flow to utilization, to storage, for the downhole injection or for the further reprocessing. The capacity of vacuum compressor 6100, throttling element 698 parameters in channel 694 and gas mixture pressure in pipeline 696 is selected from the condition of maximum for the applicable MGSU 682 rate of the treated gas recovery, and correspondingly minimum energy consumption of the treatment process.

The condensate from separator 6102 is directed either directly to utilization for example by downhole injection for maintaining of the formation pressure or is supplied to 61 12 unit for condensate stabilization if available at the plant. In the latter case three flows derive from unit 61 12 of the condensate stabilization namely gas is discharged for utilization or flaring by pipeline 61 14, the hydrocarbon condensate is deviated for the further reprocessing or for downhole injection by pipeline 61 16 and the water condensate is deviated by pipeline 61 18.

Vacuum compressor 6100 and channel 694 with throttling element 698 provide for the stable and efficient operation of MGSU 682, that allows to increase the rate of helium recovery and decrease the energy consumption for the treatment process implementation. Stable operation of MGSU 682 is also provided by means for the preprocessing of the natural gas, i.e. separator 6102, filter 6104 and heater 61 10. Besides the plant design provides for the natural gas treatment wastes utilization.

### EXAMPLE 10

### TREATMENT OF HIGH PRESSURE MIXED GAS AT THE TWO-STAGE UNIT WITH STAGES CONNECTED IN SERIES

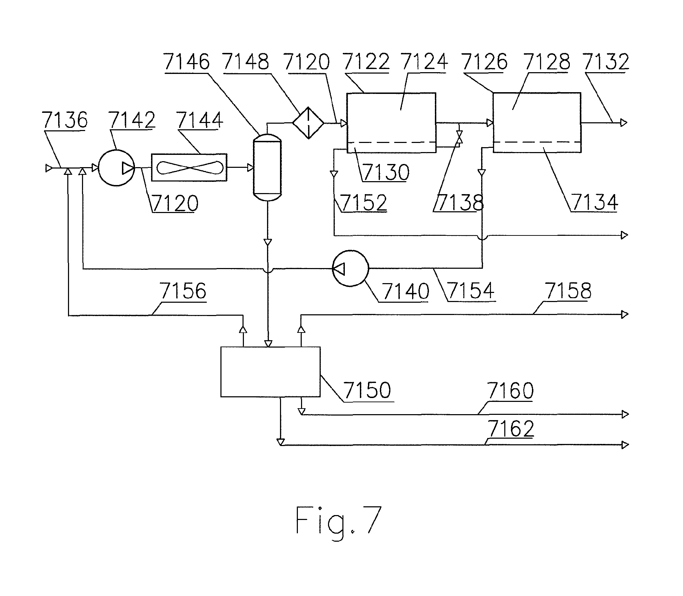

HPMG by pipeline 7120 is supplied to HPV 7124 of the first MGSU 7122;the semi-product (retentate) from HPV 7124 of the first MGSU 7122 is supplied to HPV 7128 of the second MGSU 7126 as shown at fig.7; permeate 7152 from HPV 7130 of the first MGSU 7122 is utilized, product 7132 (retentate) is taking off at the outlet of the HPV of the second MGSU 7126, permeate 7154 from LPV 7134 of the second MGSU 7126 is supplied to the feedstock pipeline 7136, part of semi-product is deviated (purging gas) from outlet of the first MGSU 7122 and via throttling element 7138 it is deviated to purging of LPV 7130 of the first MGSU 7122, herewith the pressure is decreased in LPV 7134 of the second MGSU 7126 by vacuum compressor 7140.

The capacity of vacuum compressor 7140 is selected so that to provide for the maximum pressure drop at SPM. The amount of the purging gas is chosen from the condition of the maximum gas-separation efficiency.

The discharge flow from LPV 7134 of the second MGSU is sucked and compressed by the vacuum compressor 7140 then. For treatment of HPMG from condensate and mechanical impurities the HPMG is cooled 7144, separated 7146 and is filtrated 7148 before the direct supply of HPMG to HPV 7124 of the first MGSU 7122 . The condensate flow from separator 7146 is directed to the condensate stabilization unit 7150 with four outgoing flows the first of which as the gas flow of stabilization 7156 is supplied to the feedstock flow for reprocessing, the second discharge gas flow 7158 is directed for utilization, the third stable hydrocarbon condensate 7160 is directed to the further reprocessing or downhole injected, the fourth water condensate flow 7162 is directed to the downhole injection to the formation for maintaining of the formation pressure or is directed to the utilization.

The efficient separation of gas mixture and increase of the efficiency of the method in the whole is provided by purging of the first MGSU 7122 LPV 7130 and maintaining of the decreased pressure in LPV 7134 of the second MGSU 7126.

### EXAMPLE 11

### TREATMENT OF HIGH PRESSURE MIXED GAS TILL PARAMETERS OF ITS CONSUMPTION AT THE TWO-STAGE UNIT WITH STAGES CONNECTED IN SERIES

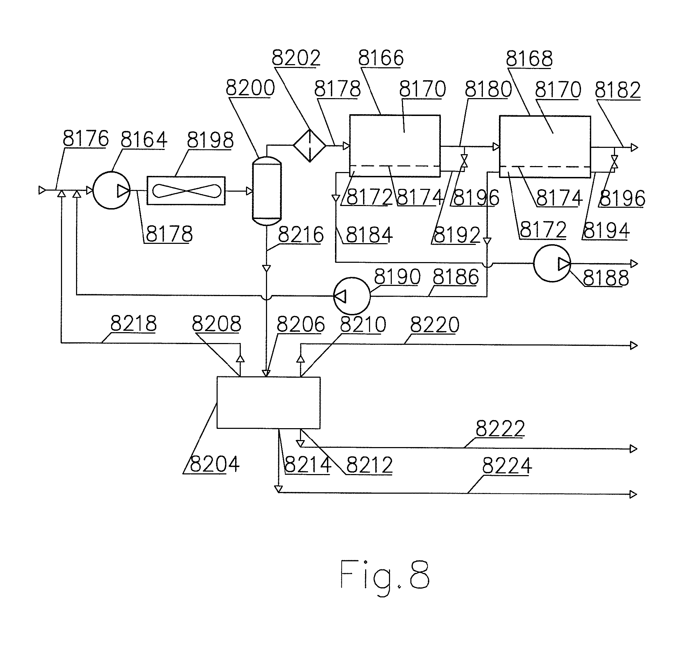

As shown at fig.8 the unit of multi-stage plant HPMG contains compressor 8164and two MGSU 8166 and 8168 connected in series with high and low pressure cavities 8170 and 8172, separated by SPM 8174. The inlet of compressor 8164 is connected with pipeline for the feedstock supply 8176, and outlet is connected with pipeline 8178 of HPMG supply with HPV MGSU inlet 8166, HPV MGSU outlet 8166 is connected by pipeline 8180 with HPV MGSU inlet 8168. HPV MGSU outlet 8168 is connected with pipeline 8182 of the treated mixed gas supply to the consumer. LPV MGSU 8166 is connected with pipeline 8184, and LPV MGSU 8168 is connected by pipeline 8186 with pipeline 8176. The plant is equipped with vacuum compressors 8188 and 8190, herewith vacuum compressor 8188 is installed in pipeline 8184, and vacuum compressor 8190 is installed in pipeline 8186. MGSU 8166 and 8168 are equipped with channels 8192 and 8194 for purging of LPV 8172. Channels 8192 and 8194 are designed so that to provide a possibility to supply part of the treated mixed gas from HPV 8170 MGSU to LPV 8172. Channels 8192 and 8194 are equipped with throttling element 8196, for example, nozzle tip for tapping part of the product or semi-product from HPV 8170 MGSU.

Channels 8192 and 8194 may be implemented in the structure of the corresponding MGSU itself. The first and second channels 8192 and 8194 of purging can be arranged by pipelines herewith the pipeline of the first channel 8192 of purging is connected with the deviating retentate flow of pipeline 8180 from the first MGSU 8166 at one end and to the low pressure volume 8172 at another end and pipeline of the second channel 8194 of purging is connected to pipeline 8182 of the treated gas mixture supply to the consumer by one end and to low pressure volume 8172 of the second MGSU 8168 by another end.

The plant can be equipped with refrigerator 8198, separator 8200 and filter 8202 installed at pipeline 8178 in series for treatment of natural gas from condensate and mechanical impurities.

In addition, the plant may be equipped with unit 8204 of condensate stabilization with one inlet 8206 and four outlets 8208, 8210, 8212 and 8214. Inlet 8206 of unit 8204 of the condensate stabilization is connected with pipeline 8216 of condensate take-off from separator 8200. The first outlet 8208 of unit 8204 of the condensate stabilization is connected by pipeline 8218 of the gas stabilization flow supply with pipeline 8176 of the feed supply for reprocessing. The second outlet 8210 is connected with pipeline 8220 of the gas mixture flow discharge to utilization. The third outlet 8212 is connected with pipeline 8222 of the stable hydrocarbon condensate takeoff to further reprocessing or to downhole injection, and the fourth outlet 8214 is connected with pipeline 8224 of water condensate takeoff for downhole injection in order to maintain formation pressure or to utilization.

By pipeline 8176 of feedstock supply, for example, feed natural or associated gas, mixed gas under pressure, for example, 0.12÷0.15 MPa is supplied to the compressor inlet 8164. The mixture is supplied to LPV8170 of the first MGSU 8166 from compressor 8164 outlet HPMG under pressure, for example, 2.5 MPa by pipeline 8178. The retentate from LPV of the first MGSU 8166 by pipeline 8180 is directed to LPV 8170 of the second MGSU 8168. Retentate with reduced impurities contents, for example, heavy hydrocarbons, water and carbon dioxide, from the second MGSU 8168 is directed to pipeline 8182 for supply to the consumer. From LPV 8172 of the first MGSU 8166 the permeate under membrane 8174 with increased contents of admixtures, for example, heavy hydrocarbons, water and carbon dioxide, is directed to utilization. From LPV 8172 of the second MGSU 8168 the permeate is directed by pipeline 8186 to pipeline 8176 of the feed supply. Certain part of the retentate is continuously taken off the high pressure cavities 8170 to LPV 8172 of the relevant MGSU for its purging, herewith the pressure is decreased in LPV 8172 of each MGSUs 8166 and 8168 by vacuum compressor 8188 and 8190 in each of MGSU 8166 and 8168 by purging channels 8192 and 8194 with throttling elements 8196. The purging of cavities 8172 and decrease of pressure in them leads to increase of the gas separation efficiency. The capacity of vacuum compressors 8088 and 8190 is chosen from the condition of provision of the maximum value of pressure ratio at gas-separation membrane 8174 of membrane modules 8166 and 8168. The amount of gas to purging is chosen on condition of provision of the maximum gas-separation efficiency in MGSU 8166 and 8168. In some cases, refrigerator 8198, separator 8200 and filter 8202 are installed in series upstream the direct supply of the high pressure mixed gas to high pressure volume 8170 of the first MGSU 8166 in high pressure pipeline 8178, that allows to remove condensate and mechanical impurities from the gas mixture. The condensate flow from separator 8200 by pipeline 8216 of condensate take-off is directed to inlet 8216 of unit 8204 of the condensate stabilization. From the first outlet 8208 of unit 8204 of the condensate stabilization at pipeline 8218 the flow feed of stabilized gas is done to pipeline 8176 of feed supply, where the flows are commingled. The gas mixture flow is discharged to utilization by pipeline 8220 from the second outlet 8210 of unit 8204 of the condensate stabilization. The stabilized hydrocarbon condensate is taken off to the further reprocessing or for downhole injection, from the third outlet 8212 at pipeline 8222, and the water condensate that may be used for downhole injection is taken off to maintain formation pressure or to the utilization from the fourth outlet 8214 by pipeline 8224.

Thus the efficient separation of the gas mixture is provided and the efficiency of the plant in general is increased by purging of LPV and maintaining decreased pressure in them.

### EXAMPLE 12

### TREATMENT OF HIGH-PRESSURE MIXED GAS AT TWO-STAGE PLANT WITH STAGES CONNECTED IN SERIES, EACH OF THE STAGES CONTAINING MEMBRANE GAS-SEPARATION UNITS CONNECTED BETWEEN EACH OTHER IN PARALLEL

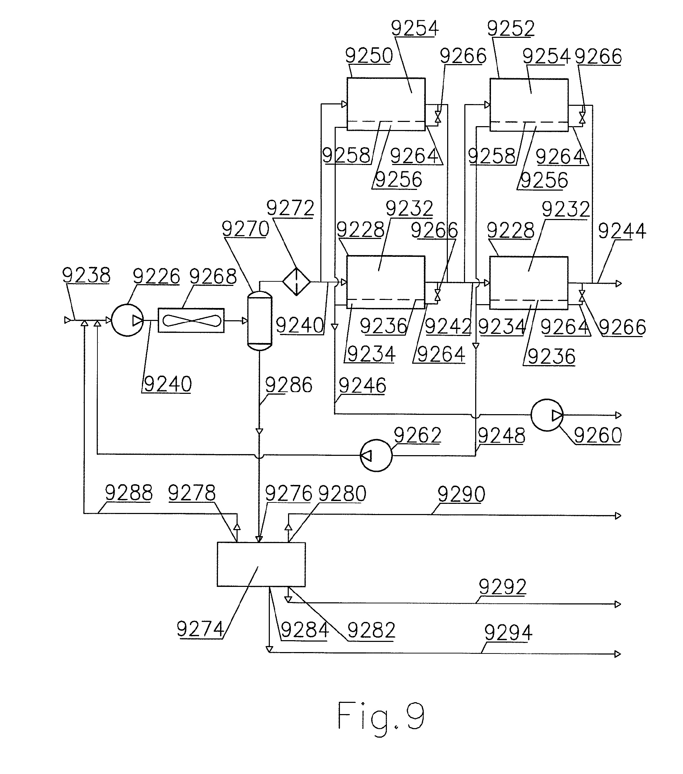

As shown at fig. 9 multi-stage treatment of mixed gas consists of compressor 9226, the first MGSU 9228 and the second MGSU 9230 with HPV and LPV 9232 and 9234, separated by SPM 9236. The compressor 9226 inlet is connected with pipeline 9238 of feed supply, and outlet is connected with pipeline 9240 with HPV 9232 inlet of the first MGSU 9228, the outlet of which is connected by pipeline 9242 with HPV 9232 inlet of the second MGSU 9230. The outlet of HPV 9232 of the second MGSU 9230 is connected with pipeline 9244 for supply of the treated gas mixture to consumer. LPV 9234 of the first MGSU 9228 is connected with pipeline 9246 for permeate takeoff for the further reprocessing or utilization, and LPV9234 of the second MGSU 9230 is connected by pipeline 9248 with feed supply pipeline 9238. The plant is equipped with additional membrane units 9250 and 9252 with high and low pressure cavities 9254 and 9256, separated by selectively permeable membrane 9258, herewith units 9250 are connected to the first membrane unit 9228 in parallel, and units 9252 are connected to the second membrane unit 9230, and to two additional vacuum compressors 9260 and 9262, herewith the first additional vacuum compressor 9260 is installed in pipeline 9246, the second vacuum compressor 9262 is installed in pipeline 9248. Each unit 9228, 9230, 9250 and 9252 is equipped with channels 9264 that are provided for a possibility of the continuous supply of part of permeate for purging from HPV 9232 and 9254 to LPV 9232 and 9256 correspondingly.

There can be more additional membrane units 9250,connected to the first MGSU 9228 than additional MGSUs 9252 connected to the second MGSU 9230. The number of MGSUs installed in parallel is selected on the basis of the condition of provision of the most optimum gas separation process at each stage and most efficient operation of the whole plant in general.

Each channel 9264 for purging of LPV 9234 and 9256 may have throttling element 9266, for example, nozzle tip, for provision of selection of the exact certain part of retentate from HPV 9232 and 9254. Channels 9264 for purging can be envisaged in the structure itself of the relevant MGSU or by pipelines arrangement.

The plant can be equipped with refrigerator 9268, separator 9270 and filter 9272 in pipeline 9240 installed in series for treatment of natural gas from condensate and mechanical admixtures.

In addition the plant can be equipped with unit 9274 of the condensate stabilization, with one inlet 9276 and four outlets 9278, 9280, 9282 and 9284. Inlet 9276 of unit 9274 of the condensate stabilization is connected with pipeline 9286 of the condensate takeoff from separator 9270. The first outlet 9278 of unit 9274 of the condensate stabilization is connected with pipeline 9288 of feed gas flow stabilization with feed supply pipeline 9238 for reprocessing. The second outlet 9280 is connected with pipeline 9290 of the gas mixture flow discharge to utilization. The third outlet 9282 is connected with pipeline 9292 of the stable hydrocarbon condensate takeoff for the further reprocessing or for downhole injection, and the fourth outlet 9284 is connected with pipeline 9294 for the water condensate takeoff for downhole injection to maintain the formation pressure or to utilization.

Feedstock (for example, feed natural or associated gas), is supplied to compressor inlet 9226 by pipeline 9238. Downstream outlet from compressor 9226 the mixed gas goes via refrigerator 9268, separator 9270, filter 9272 installed in series by pipeline 9240and enters high pressure cavities 9232 and 9254 of the first MGSU 9228 and additional MGSUs 9250 connected in parallel. Retentate above membrane 9236 of the first MGSU 9228 via membrane 9256 of additional MGSUs 9250 is directed to LPV 9232 and 9254 of the second MGSU 9230 and additional MGSU 9252 by pipeline 9242. Retentate from HPV 9232 and 9254 of the second MGSU 9230 and additional MGSU 9252with decreased content of admixtures, for example, heavy hydrocarbons, water and carbon dioxide, is directed to pipeline 9244 for supply to the consumer. Permeate with increased contents of admixtures, for example, heavy hydrocarbons, water and carbon dioxide from LPV 9234 and 9256 of the first MGSU 9228 and additional MGSUs 9250 under membrane 9236 and 9258 is directed to utilization by pipeline 9246. Permeate from LPV 9234 and 9256 of the second MGSU 9230 and additional MGSUs 9252 is directed to feedstock supply pipeline 9238 by pipeline 9248. 9266 Certain part of permeate is continuously taken off in each of MGSUs 9228 and 9230 and in each of the additional MGSUs 9250 and 9252 by purging channels 9264 with throttling elements from HPV 9232 and 9254 to LPV 9234 and 9256 of the relevant MGSU for purging, herewith the pressure is decreased in LPV 9234 and 9256 MGSU 9228 and 9230 and additional MGSU 9250 and 9252 by vacuum compressors 9260 and 9262, installed in pipeline 9246 and 9248, correspondingly. Purging of LPV 9234 and 9256 and decrease of pressure in them lead to increase of the gas separation efficiency. The capacity of vacuum compressors 9260 and 9262 is chosen on the basis of the condition of provision of maximum ratio of pressures at membranes 9236 and 9258 MGSU 9228 and 9230 and additional MGSUs 9250 and 9252. The amount of purging gas is chosen on the basis of provision of the maximum gas separation efficiency in MGSU 9228 and 9230 and additional MGSUs 9250 and 9252.

The condensate flow from separator 9270 by pipeline 9286 of condensate takeoff is directed to inlet 9276 of unit 9274 of the condensate stabilization, providing a possibility of condensate separation to the components. From the first outlet 9278 of unit 9274 of condensate stabilization by pipeline 9288 the stabilized gas flow is deviated to pipeline 9238 of the feedstock supply. The gas mixture flow from the second outlet 9280 of condensate stabilization unit 9274 by pipeline 9290 is discharged to utilization. Stable hydrocarbon condensate from the third outlet 9282 is deviated to the further treatment by pipeline 9292, or is downhole injected, and the fourth outlet 9284 is dedicated for the water condensate that may be used for downhole injection to maintain the formation pressure or for utilization, the water condensate is deviated by pipeline 9294.

Herewith the provision of the plant with additional membrane modules 9250 and 9252 and carrying out of purging in all MGSUs 9228, 9230, 9250 and 9252 of LPVs 9234 and 9256 and simultaneous maintaining of the decreased pressure in them provide for the capacity increase and efficient separation of the gas mixture.

### EXAMPLE 13

### TREATMENT OF NATURAL AND ASSOCIATED HIGH-PRESSURE PETROLEUM GAS AT SINGLE-STAGE PLANT IN WHICH THE PERMEATE OBTAINED FROM THE FIRST STAGE IS TREATED AT THE SECOND STAGE

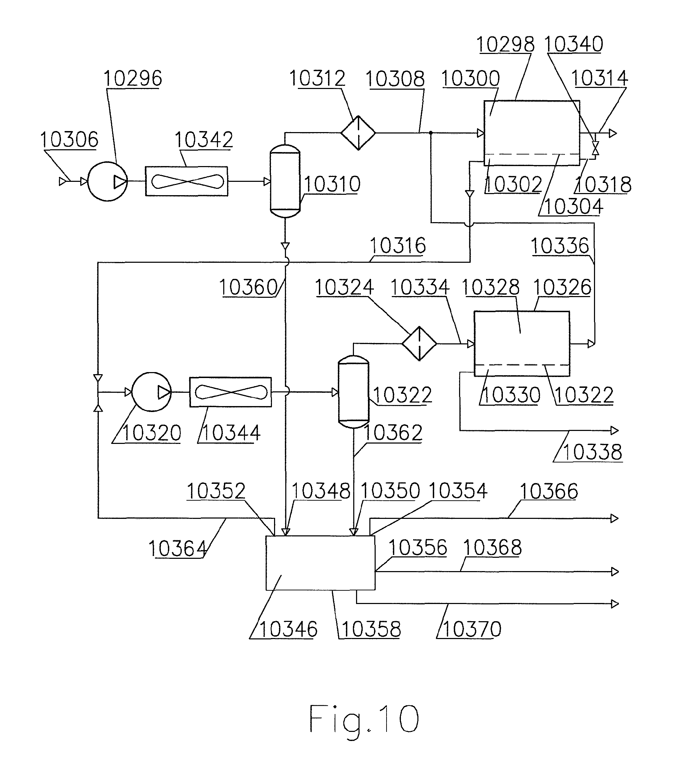

As shown at fig. 10 the unit of the fuel gas treatment from natural or associated petroleum gas contains compressor 10296 and MGSU 10298 with high and low pressure cavities 10300 and 10302, separated by SPM 10304, compressor inlet 10296 is connected with feedstock supply pipeline 10306, and outlet is connected with pipeline 10308 (via separator 10310 and filter 10312) with HPV inlet 10300 of MGSU 10298,outlet of which is connected with pipeline 10314 of the treated fuel gas to consumer, herewith LPV 10302 MGSU 10298 is connected with pipeline 10316, and the unit is equipped with channel 10318, designed with possibility of continuous supply of the part of retentate from HPV 10300 of MGSU 10298 to LPV 10302 for purging and additionally by compressor 10320, separator 10322, filter 10324 and MGSU 10326 with high and low pressure cavities 10328 and 10330, separated by membrane 10332, herewith inlet of the additional compressor 10320 is connected by pipeline 10316, and outlet is connected by an additional high pressure pipeline 10334 via additional separator 10322 and filter 10324 with inlet of HPV 10328 of additional MGSU 10326. The outlet of HPV 10328 of additional MGSU 10326 is connected by pipeline 10336 with mixed gas high pressure pipeline 10308 at the section between filter 10312 and MGSU 10298, and LPV 10330 of additional MGSU 10326 is connected to pipeline 10338. Channel 10318 may be equipped with throttling element 10340 for purging, for example, a nozzle tip. Channel 10318 for purging may be implemented in MGSU 10298 itself or by pipelines arrangement. The plant may be equipped with two refrigerators 10342 and 10344, first refrigerator 10342 is installed in high pressure pipeline 10308 between compressor 10296 and separator 10310, and second refrigerator 10344 is installed in additional high pressure pipeline 10334 between additional compressor 10320 and additional separator 10322. The plant can be also equipped by unit 10346 of the condensate stabilization with two outlets 10348 and 10350 and four outlets 10352, 10354, 10356 and 10358, herewith the first inlet 10348 of unit 10346 of the condensate stabilization is connected with condensate discharge pipeline 10360 from separator 10310, and the second inlet 10350 is connected with pipeline of the condensate takeoff 10362 from additional separator 10332, herewith the first outlet 10352 of the condensate stabilization unit 10346 is interconnected with pipeline 10364 and then connected with feed gas stabilization supply pipeline 10316 for reprocessing, second outlet 10354 is connected with pipeline 10366 of the gas mixture flow discharge to utilization, third outlet 10356 is connected with pipeline 10368 of stabilized hydrocarbon condensate takeoff to further reprocessing or to downhole injection, the fourth outlet 10358 is connected with pipeline 10370 of the water condensate takeoff for its downhole injection to maintain the formation pressure or to utilization.

Feedstock (natural or associated petroleum gas) by pipeline 10306 is supplied to inlet of compressor 10296. From outlet of compressor 10296 the compressed gas by pipeline 10308 via refrigerator 10342, separator 10310, filter 10312 is directed to LPV 10300 MGSU 10298. Mixed gas is pre-treated in separator 10310 and filter 10312from the water condensate and heavy hydrocarbons and mechanical particles. The gas mixture flow to MGSU 10298 is separated to two flows -retentate flow above membrane 10304 and permeate flow under membrane 10304. The retentate flow above membrane 10304 with low contents of water vapours and heavy hydrocarbons is directed by pipeline 10314 to consumer, herewith part of retentate is continuously deviated by channel 10318 to LPV 10302 for purging, that increases gas separation efficiency in MGSU 10298. Throttling element 10340, for example, nozzle tip, provides for the selection of the certain retentate part from HPV 10300. From LPV 10302 gas mixture with increased contents of water vapours and heavy hydrocarbons by pipeline 10316 is directed to inlet of additional compressor 10320, that from one side compresses gas mixture and from the other side decreases pressure in LPV 10302 of MGSU 10298, thus providing the necessary ratio of pressures at membrane 10304, that is close to optimum value for efficient gas separation. Gas mixture from additional compressor 10320 via additional refrigerator 10344, separator 10322 and filter 10324 is supplied by additional high pressure pipeline 10334 to LPV 10328 of additional MGSU 10326, wherein gas mixture is divided to two flows: retentate flow above membrane 10332 and permeate flow under membrane 10332. The retentate flow enriched with methane is deviated by pipeline 10336 to pipeline 10308 at its section between filter 10312 and MGSU 10298, and permeate flow with large content of water vapours and low content of heavy hydrocarbons is deviated to utilization by pipeline 10338.

If the plant is equipped with unit 10346 of the gas stabilization from separator 10310 and additional separator 10322 the condensate is supplied by pipelines 10360 and 10362 to inlets 10348 and 10350. In unit 10346 of the condensate stabilization, the condensate is divided into four flows. From the first outlet 10352of unit 10346 of the condensate stabilization the stabilization gas flow is transported by pipeline 10364 to pipeline 10316. The flow of gas mixture from the second outlet 10354 of unit 10346 of condensate stabilization by pipeline 10366 is directed to utilization. The third outlet 10356 is dedicated to deviation stable hydrocarbon condensate to further re-treatment or for downhole injection by pipeline 10368, and the fourth outlet 10358 is dedicated to deviation the water condensate that can be used for downhole injection to maintain the formation pressure or to the utilization by pipeline 10370.

Purging of LPV with treated mixed gas allows to increase the gas separation efficiency and to decrease the treated gas loses.

### EXAMPLE 14

### DRYING OF NATURAL OR ASSOCIATED HIGH-PRESSURE PETROLEUM GAS AT TWO-STAGE UNIT WHERE THE DISCHARGE FLOW FROM THE FIRST STAGE IS TREATED AT THE SECOND STAGE

The plant for drying of natural gas contains two MGSUs 1 1372 and 1 1374 with high and low pressure cavities 1 1376 and 1 1378, separated by selectively permeable membrane 11380, compressor 11382, refrigerator 11384 and separator 11386 as shown at fig.1 1. The inlet of the high pressure volume 11376 of the first MGSU 11372 is connected with pipeline for feedstock supply 11388, and outlet is connected with pipeline 11390. Inlet of LPV 11378 of the first MGSU 11372 is connected with the first channel 11392 of purging, and outlet is connected with the first pipeline 11394, connected to the inlet of compressor 11382, outlet of which is connected by pressure pipeline 11396 (where refrigerator 11384 and separator 11386 are connected in series), with inlet of HPV 11376 of the second MGSU 11374, the outlet is connected with pipeline 11398. The low pressure volume 11378 of the second MGSU 11374 is connected by pipeline 11400 with pipeline 11394 and the second purging channel 11402, providing for the continuous supply of part of the retentate from the second MGSU 11374 to its LPV 11378. The first channel 11392 of purging is designed with possibility of provision of continuous supply of part of the retentate from the first MGSU 11372 in its LPV 11378. Pipeline 11398 from the second MGSU 11374 is connected to the outlet pipeline 11390.

Channels 11392 and 11402 of purging have throttling element 11404, for example as a nozzle tip. The plant can be equipped with additional separator 11406 and two filters 11408 and 11410, herewith additional separator 11406 and the first filter 11408 are installed in series in the supply pipeline 11388, and the second filter 11410 is installed in pressure pipeline 11396 between separator 11386 and second MGSU 11374.

The plant may be equipped with additional membrane modules (not shown at figl 1.), herewith at least one additional MGSU is connected in parallel to each of the membrane modules 11372 and 11374. The plant may be equipped with unit 11412 of the condensate stabilization, with two inlets 11414 and 11416 and four outlets 11418, 11420, 11422 and 11424, herewith each of inlets 11414 and 1 1416 of unit 1 1412 of the condensate stabilization is connected with the corresponding pipeline 1 1426 and 1 1428 of the condensate takeoff from additional separator 1 1406 and separator 1 1386, the first outlet 1 1418 of unit 1 1412 of condensate stabilization is connected to pipeline 1 1430 of gas stabilization flow supply, connected to pipeline 1 1400, the second outlet 1 1420 is connected to pipeline 1 1432 of the mixed gas flow discharge to utilization, the third outlet 1 1422 is connected to pipeline 1 1434 of the stable hydrocarbon condensate discharge to further treatment or for its downhole injection, the fourth outlet 1 1424 is connected with pipeline 1 1436 of the water condensate discharge for downhole injection for maintaining of formation pressure or to utilization.

Feed natural gas by the deviating pipeline 1 1388 is supplied to high pressure volume 1 1376 of the first MGSU 1 1372. Separator 1 1406 and filter 1 1408, installed in the supply pipeline 1 1388 can be used for preliminarily drying of natural gas. Natural gas in the first MGSU 1 1372 at membrane 1 1380 is divided into two flows i.e. to permeate flow under 1 1380, and to retentate, herewith retentate contains no moisture in any sigtnificant amount. Retentate above membrane 1 1380 from HPV 1 1376 of the first MGSU 1 1372 is directed to outlet pipeline 1 1390, whereof it is directed to consumer. From volume 1 1378 of low pressure of the first MGSU 1 1372 permeate with large contents of moisture is transported by pipeline 1 1394 to the inlet of compressor 1 1382, herewith volume 1 1378 is continuously purged with part of retentate from the first MGSU 1 1372, supplied by channel 1 1392. From the outlet of compressor 1 1382 the gas flow by pipeline 1 1396 is directed to refrigerator 1 1384 and then to separator 1 1386, wherein the gas flow is depleted from moisture and condensate. Then the gas flow via filter 1 1410 gets to LPV 1 1376 of the second MGSU 1 1374. From HPV 1 1376 of the second MGSU 1 1374 retentate above membrane 1 1380 is directed by pipeline 1 1398 to outlet pipeline 1 1390. Gas mixture with large contents of moisture is supplied by pipeline 1 1400 to pipeline 1 1394 from LPV 1 1378 of the second MGSU 1 1374. The purging of LPV 1 1378 of the second MGSU 1 1374 is accomplished by supply of retentate from the second MGSU gas flow of by channel 1 1402. Throttling elements 1 1404, for example, nozzle tips installed in channels 1 1392 and 1 1402, provide for the necessary consumption of gas flow to purging.

If the condensate stabilization unit 1 1412 is available flows from separators 1 1406 and 1 1386 are transported to inlets 1 1414 and 1 1416 by pipelines 1 1426 and 1 1428 correspondingly. The gas stabilization flow from outlet 1 1418 is directed by pipeline 1 1430 to pipeline 1 1400. From the pipeline outlet 1 1420 the gas mixture flow is directed to utilization by pipeline 1 1432 The hydrocarbon condensate connected to the third outlet 1 1422 is deviated to the further treatment or for downhole injection by pipeline 1 1434, and, , the water condensate connected to the fourth outlet 1 1424 from the condensate stabilization unit 11412 is deviated by pipeline 1 1436for downhole injection for maintaining of the formation pressure or to utilization.

Purging of LPV 1 1378 MGSU 1 1372 with drying retentate flow from the first MGSU 1 1372, allows to direct the gas flow dried in the second MGSU 1 1374 to consumer that lead to increase of the plant capacity. Besides it gave an opportunity to carry out drying of the natural gas with higher content of the primary water and heavy hydrocarbons not only from water but also from heavy hydrocarbons.

### EXAMPLE 15

### THE DRYING OF HIGH-PRESSURE NATURAL OR ASSOCIATED PETROLEUM GAS AT TWO-STAGE UNIT WHEREAT THE DISCHARGE FLOW FROM THE FIRST STAGE IS TREATED AT THE SECOND STAGE

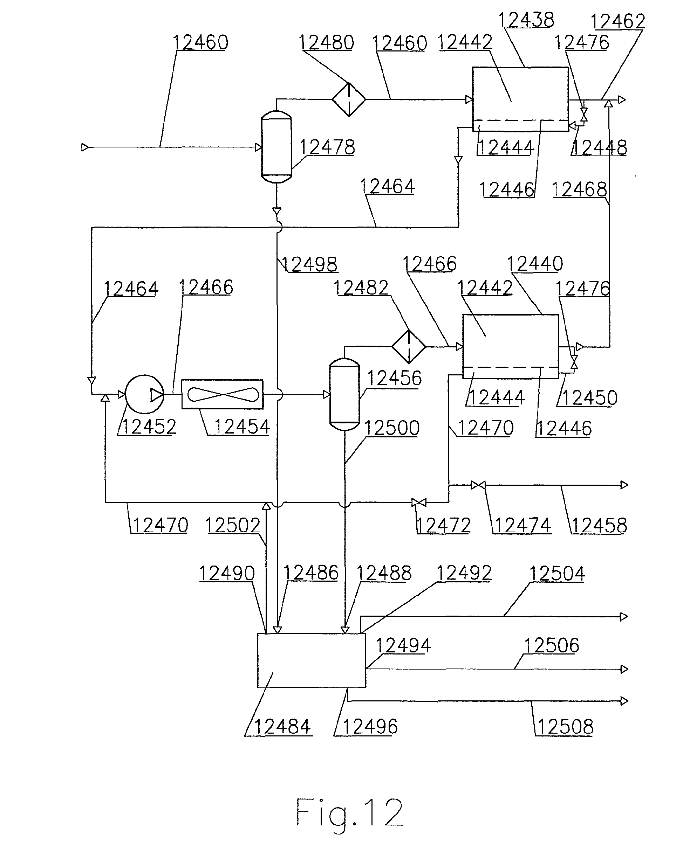

As shown at fig. 12 the unit for drying of the natural gas contains two MGSUs 12438 and 12440 with HPV 12442 and LPV 12444, separated by SPM 12446, channels 12448 and 12450 of purging of LPV 12444, compressor 12452, refrigerator 12454, separator 124560 and discharge pipeline 12458. Inlet of HPV 12442 of the first MGSU 12438 is connected with supply pipeline 12460, and the outlet is connected with outlet pipeline 12462. Inlet of LPV 12444 from the first MGSU 12438 is connected with the first purging channel 12448, and the outlet is connected with pipeline 12464, connected to compressor inlet 12452. The compressor outlet 12452 is connected with pressure pipeline 12466 (with refrigerator 12454 and separator 12456 installed in series) with inlet of HPV 12442 of the second MGSU 12440, the outlet of which is connected to pipeline 12468. LPV 12444 of the second MGSU 12440 is connected by pipeline 12470 with pipeline 12464 and with the second channel 12450 for purging, providing continuous supply of some part of retentate from HPV of the second MGSU 12440. This plant is also equipped with two shut-off regulating devices 12472 and 12474, herewith the first shut-off regulating device 12472 was installed at pipeline 12470, the second shut-off regulating device 12474 is installed at discharge pipeline 12458, that is connected with pipeline 12470 at section between the first shut-off regulating device 12472 and the second MGSU 12440. The first purging channel 12448 provides for the possibility of continuous supply of some retentate from the first MGSU 12438 to its LPV 12444, and pipeline 12468 from the second MGSU 12440 is connected to the outlet pipeline 12462.

The plant can contain throttling elements 12476 in purging channels 12448 and 12450 for example a nozzle tip.

The unit can be equipped with additional separator 12478 and two filters 12480 and 12482, herewith additional separator 12478 and first filter 12480 are installed in series in the supply pipeline 12460, and the second filter 12482 is installed in pressure pipeline 12466 between separator 12456 and the second MGSU 12440.

The unit can be equipped with additional membrane modules (not shown at fig.12), herewith at least one additional MGSU is installed in parallel to each of membrane modules 12438 and 12440. The plant can be equipped with condensate stabilization unit 12484, with two inlets 12486 and 12488 and four outlets 12490, 12492, 12494 and 12496, herewith each of inlets 12486 and 12488 of unit 12484 of condensate stabilization is connected to pipelines 12498 and 12500 of condensate takeoff from the relevant separator 12478 and 12482, the first outlet 12490 of unit 12484 of condensate stabilization is connected to pipeline 12502 of gas flow stabilization supply, connected by pipeline 12470, the second outlet 12492 is connected to pipeline 12504 of the gas mixture flow deviation to utilization, the third outlet 12494 is connected to pipeline 12506 of stable hydrocarbon deviation for further treatment or for its downhole injection, the fourth outlet 12496 is connected with discharge pipeline 12508 of water condensate for its downhole injection for maintaining of the formation pressure or to utilization.

The feed natural gas is supplied to high pressure volume 12442 of the first MGSU 12438 by supply pipeline 12460. Separator 12478 and filter 12480 installed in supply pipeline 12460 can be used for preliminarily drying and treatment of natural gas from mechanical particles. Natural gas in the first MGSU 12438 is separated into two flows at membrane 12446 i.e. to permeate under membrane 12446 and to retentate, herewith retentate practically does not contain any moisture. From HPV 12442 of the first MGSU 12438 retentate above membrane 12446 is transported to pipeline 12462, whereof it is directed to the consumer. The gas flow with large content of moisture from LPV 12444 of the first MGSU 12438 is supplied by pipeline 12464 to compressor inlet 12452, herewith volume 12444 is purged by continuous supply of part of the retentate from the first MGSU 12438 to channel 124486. From compressor outlet 12452 gas flow by pressure pipeline 12466 is directed to refrigerator 12454 and then to separator 12456, wherein moisture is removed from the gas flow. Then gas flow via filter 12482 goes to HPV 12442 of the second MGSU 12440. Retentate above membrane 12446 from HPV 12442 of the second MGSU 12440 is directed by pipeline 12468 to outlet pipeline 12462. Permeate with large content of moisture from LPV 12444 of the second MGSU 12440 is supplied by the second pipeline 12470 via open shut-off regulating device 12472 to pipeline 12464, herewith shut-off regulating device 12474, installed in the discharge pipeline 12458, is closed. In case of decreasing of the quality of the drying natural gas due to excess of moisture in permeate from the second MGSU 12440, it is periodically discharged by pipeline 12458, herewith for a short period the shut-off regulating device 12472 to be closed and shut-off regulating device 12474 to be open. Thus the moisture content in permeate from MGSU 12440 is decreased. The purging of LPV 12444 of the second MGSU 12440 is done by supply of part of retentate from the second MGSU 12440 by channel 12450. Throttling elements 12476, for example, nozzle tips, installed in channels 12448 and 12450, provide for necessary consumption of the purging gas.

If the condensate stabilization is available in the unit 12484 condensate is supplied by pipelines 12498 and 12500 from separators 12478 and 12456 to inlets 12486 and 12488. Stabilized gas is directed from outlet 12490 by pipeline 12502 to pipeline 12470. The gas mixture is directed to utilization from outlet 12492 by pipeline 12504 Stable hydrocarbon condensate connected to the third outlet 12494 is taken off by pipeline 12506 for the further reprocessing or is downhole injected, and by pipeline 12508, connected to the fourth outlet 12496, water condensate is deviated from the condensate stabilization unit 12484 for downhole injection for maintaining formation pressure or to utilization.

Purging of LPV 12444 MGSU 12438 with dried retentate from HPV MGSU 12438, and provision of possibility of periodical discharge of non-specification gas flow from low pressure pipeline 12470 allowed to direct gas flow dried at the second MGSU 12440 also in the outlet pipeline for consumer, that lead to increase of efficiency of gas drying in the plant. Besides, it provided a possibility to carry out drying of gases mixture not only from water but also from heavy hydrocarbons, herewith the drying gases mixture can have higher content of the initial water and heavy hydrocarbons.

## Claims

1. The method of the plant operation for treatment of high pressure mixed gas (HPMG) from high permeable components (HPC), containing membrane gas separation units (MGSU) with high pressure volume (HPV), low pressure volume (LPV) and selectively permeable membrane (SPM), installed between cavities, wherein LPV, of at least, one of MGSUs is continuously purged with treated gas mixture (semi-product or product), herewith pressure drop between the mentioned cavities of this MGSU, and also consumption of the treated gas mixture, directed to purging, are maintained so that the content of each of HPCs in the product does not exceed the desirable values.

2. Method per claim 1 wherein HPV from mentioned MGSUs, are connected between each other in series.

3. Method per claim.1 or 2, wherein HPV of at least one MGSU is connected in parallel to HPV of at least one of additional MGSU or, at least one membrane gas separation unit (MGSU) contains , at least, two membrane gas separation modules (MGSMs), each of them in its turn contain high pressure volume (HPV), low pressure volume (LPV) and SPM between them, herewith inlets and outlets of LPV and HPV of the mentioned MGSU or inlets and outlets of the mentioned MGSM are connected between each other in parallel.

4. Method per claim 1 wherein the gas mixture from the outlet of LPV, of at least one of MGSU is supplied to inlet of HPV of another MGSU, purging of both MGSUs with LPV semi-product.

5. Method per any of claims 1-4 wherein gas mixtures supplied to inlet of HPV, of at least the first of the main MGSU, are preliminarily compressed.

6. Method per claim 1-5 wherein gas mixtures supplied to HPV inlet are pre-cooled.

7. Method per claims 1-6 wherein gas mixtures supplied to inlet of HPV are preliminarily separated and filtrated.

8. Method per claims 1-7 wherein gas mixtures supplied to HPV inlet are pre-heated.

9. Method per claims 1-8 wherein gas mixtures supplied to the inlet of HPV are preliminarily compressed and/or preliminarily compressed and cooled and/or preliminarily compressed, then cooled and then separated and then filtrated and/or preliminarily compressed, then cooled, then separated, then filtrated and then heated.

10. Method per any of claims 1-9 wherein in LPV of at least one MGSU the pressure is decreased.

11. Method per claim 10, wherein the mentioned pressure relief is achieved in LPV of at least the first of the main MGSUs.

12. Method per claims 1-11 wherein the treated gas mixture from outlet of HPV of at least one of the MGSUs is used for purging of LPV of at least one of the preceding MGSU.

13. Method per claim 12 wherein treated gas mixture from outlet of HPV of at least one MGSU is used for purging of LPV of at least the first of the main MGSU.

14. Method per any of claims 1-13, wherein the pressure of the mentioned treated gas mixture directed to purging of LPV (purging gas flow) is decreased before purging.

15. Method per any of claims 1-14 wherein gas mixtures from outlet of LPV, of at least one MGSU are directed to inlet of HPV of at least one of preceding MGSUs.

16. Method per claim 15 wherein gas mixtures from outlet of LPV of at least one MGSU are directed to inlet of HPV of at least the first of the head MGSU.

17. Method per claim 14 wherein pressure of treated gas mixture before purging of LPV is decreased by throttling gate, porous body or nozzle tip.

18. Method per claims 1-17 wherein treated gas mixture (purging gas) is directed by compressor or vacuum compressor to purging.

19. Method per any of claims 1-18 in which pressure decrease in LPV is created by vacuum compressor.

20. Method per claims 1-19 wherein SPM are done as selectively permeable hollow or flat membranes installed at a frame or spiral wound type.

21. Method per any claims 1-20, wherein gas mixture from outlet of LPV of at least one MGSU is used for power supply and/or is compressed and is directed to utilization and/or to storage and/or downhole injected and/or re-processed.

22. Method per any claims 1-21 wherein treated gas mixture from HPV of at least one MGSU is directed to consumer.

23. Method per claim 22 wherein the treated gas mixture from HPV is directed to the consumer of at least one of tail MGSUs preferably from HPV of tail MGSU.

24. Method per any claims 7-23 wherein condensate obtained at separation is stabilized with stabilized gas, hydrocarbon condensate and water removal.

25. Method per claim 24, wherein stabilized gas is directed to the inlet of HPV of at least the first of the head MGSU, preferably to inlet of HPV of the first MGSU.

26. Method per any of claims from claim 24 or claim 25 wherein the discharge gas generated at stabilization is directed to utilization, stable hydrocarbon condensate is directed to reprocessing or is downhole injected and water condensate is downhole injected for maintaining of the formation pressure or is directed to utilization.

27. Method per any of claim 1 or claim 2 wherein the plant has two MGSUs, HPMG is fed to HPV of the first MGSU, gas mixture from HPV of the first MGSU is fed to HPV of the second MGSU, gas mixture from outlet of LPV of the second MGSU is directed to inlet of HPV of the first MGSU, LPV of the first and second MGSU is continuously purged with gas mixture from HPV of the first and second MGSU correspondingly and the pressure in LPV of the first and second MGSU is decreased by vacuum-compressor.

28. Method per either claim 1 or claim 2 wherein LPV of the first MGSU is used for purging with gas mixture from the outlet of HPV of the first MGSU and/or from the outlet of HPV of the following MGSU and/or the pressure in it is decreased (LPV of the first MGSU), herewith gas mixture from its outlet(LPV of the first MGSU) is directed to inlet of HPV of the second MGSU and/or to inlet of HPV of the further MGSU.

29. The method per any of claim 1 or claim.2, wherein the plant with two MGSUs is used, HPMG is supplied to the inlet of HPV of the first MGSU, gas mixture from the outlet of HPV of the second MGSU is used for continuous purging of LPV of the first and/or the second MGSU and/or pressure in LPVs is decreased.

30. The method of any claim 1 or claim 2, wherein the plant with two MGSUs is used, HPMG is supplied to HPV of the first MGSU, gas mixture from the outlet of HPV of the first MGSU is continuously used for purging of LPV of the first MGSU, and other part of the gas mixture is supplied to inlet of HPV of the second MGSU, herewith the pressure is decreased in LPV of the second MGSU, and gas mixture from outlet of LPV of the second MGSU is directed to the inlet of HPV of the first MGSU.

31. The method per any claims 1-30, wherein the consumption of the treated gas mixture that is used for purging of the mentioned LPV (consumption of the purging gas flow), and/or pressure in LPV is set so that to provide the compliance of the product with the requirements on content of each HPC.

32. Method per claim 31 in which the mentioned pressure is set in such a way as to provide the desirable treatment rate per each HPC.

33. Method from claims 1-32, wherein consumption of treated gas mixture directed to purging (consumption of the purging gas flow), is selected in such a way so that the product yield with contents of each of HPC not increasing the desirable values was increased of at least by consumption rate value of treated gas mixture directed to purging.

34. The plant for treatment of high pressure gas mixture (HPMG) from high permeable components (HPC), containing membrane gas separation units (MGSU) with high pressure volume (HPV), low pressure volume (LPV) and selectively permeable membrane (SPM), installed between them that is equipped with pressure regulation media in HPV and LPV, provided with possibility of such pressure drop of at least in one of the mentioned MGSUs, and means of LPV purging with treated gas mixture (semi-product or product), herewith these mentioned media are accomplished in such a way so to maintain the pressure drop between HPV and LPV and consumption of gas mixture that is used for purging of LPV, at which the contents of each of the mentioned HPC in product do not exceed the desirable values.

35. Plant per claim 34 in which LPV of at least one MGSU is equipped with pressure relief means.

36. Plant per any of claim 34 or 35 wherein LPV of at least one MGSU is equipped with means of pressure relief and provides a possibility of purging with treated gas mixture.

37. Plant per any of claims 34-36, wherein HPV MGSU are connected between each other in series , herewith LPV, of at least the first of tail MGSUs is connected with HPV inlet of at least one of the head MGSU, preferably with the inlet of the first MGSU.

38. Plant per claim 34, wherein the inlet of HPV, of at least one of MGSUs is connected with outlet of LPV, of at least one other MGSU via compressor, refrigerator, separator and filter.

39. Plant per claim 33, wherein inlets and outlets of HPV, of at least two MGSUs are connected between each other in parallel.

40. Plant per any claim 34-39, wherein refrigerator, separator and filter are installed at inlet of HPV of the first of MGSU.

41. Plant per any of claim 38 or claim 40 wherein the mentioned separator is equipped with condensate stabilization unit with outlets for stabilized gas, discharge gas, water condensate and for stabilized hydrocarbon condensate.

42. Plant wherein the outlet of the mentioned stabilization unit for stabilized gas is connected with HPV inlet of the first MGSU.

43. Application of method per claim 1 for simultaneous treatment of natural and associated high pressure gas of at least from two high permeable components.

44. Application per claim 43 wherein natural gas is treated from components selected from group including water vapour, carbon dioxide, carbon monoxide, hydrogen sulphide, merkaptans and helium.

45. Application of method per claim 1 for recovery of helium from high pressure natural gas.
